# EUROPEAN PATENT SPECIFICATION

(11) **EP 3 226 001 B1**
(45) Date of publication and mention of the grant of the patent: **16.02.2022**
(21) Application number: 17163277.1
(22) Date of filing: 28.03.2017
(51) Int. Cl.: G01N 35/00, G01N 35/02, G01N 35/04

(54) **SAMPLE ANALYSIS SYSTEM AND SAMPLE ANALYSIS METHOD**
PROBENANALYSESYSTEM UND PROBENANALYSEVERFAHREN
SYSTÈME D'ANALYSE D'ÉCHANTILLONS ET PROCÉDÉ D'ANALYSE D'ÉCHANTILLONS

(30) Priority: 31.03.2016 JP 2016073721
(43) Date of publication of application: 04.10.2017
(60) Divisional application: 21218443.6
(73) Proprietor: SYSMEX CORPORATION, Kobe-shi, Hyogo 651-0073 (JP)
(72) Inventor: Tatsutani, Hiroo, Kobe-shi, Hyogo 651-0073 (JP); Takai, Kei, Kobe-shi, Hyogo 651-0073 (JP); Kumagai, Atsushi, Kobe-shi, Hyogo 651-0073 (JP); Tanaka, Toshihisa, Kobe-shi, Hyogo 651-0073 (JP)
(74) Representative: Hoffmann Eitle

(56) References cited:
- EP-A1- 2 256 502
- EP-A1- 2 693 219
- JP-U- H02 146 369
- US-A1- 2010 166 605

## Description

### Technical Field

The disclosure relates to a sample analysis system including measurement apparatuses arranged therein to measure samples in sample containers.

### Background

A sample analysis system has been known in which measurement units analyze many samples while transport apparatuses transport samples rack each containing samples to the measurement units. Patent Literature 1 describes a sample analysis system including measurement units and transporting devices disposed corresponding to the respective measurement units . In the sample analysis system described in Patent Literature 1, each of the transporting devices transports a sample rack holding sample containers and supplies the sample containers to the corresponding measurement unit.

Patent Literature 1: Japanese Patent Application Publication No. 2012-211786

An aspect of the invention is a sample analysis system according to claim 1.

Another aspect of the invention is a sample analysis method according to claim 14.

According to the aspect(s) of the invention, the installation area can be reduced while maintaining the processing capability.

### Brief Description of Drawings

Fig. 1 is a diagram schematically illustrating a configuration of a sample analysis system according to Embodiment 1.
Fig. 2A is a perspective view illustrating a configuration of a sample container according to Embodiment 1. Fig. 2B is a perspective view illustrating a configuration of a sample rack according to Embodiment 1.
Fig. 3 is a diagram schematically illustrating a configuration of a sample analysis system according to Comparative Example 1.
Fig. 4 is a diagram schematically illustrating a configuration of a transport unit according to Embodiment 1.
Fig. 5A is a diagram schematically illustrating a configuration of a first measurement unit according to Embodiment 1. Fig. 5B is a diagram schematically illustrating a configuration of a processing unit according to Embodiment 1.
Fig. 6 is a diagram schematically illustrating configurations of a loader unit and a collection unit according to Embodiment 1.
Fig. 7 is a side view schematically illustrating the sample analysis system according to Embodiment 1.
Figs. 8A and 8B are diagrams schematically illustrating positions of sample racks in a linear transfer part according to Embodiment 1. Figs. 8C and 8D are diagrams schematically illustrating positions of sample racks in a linear transfer part according to Comparative Example 1. Fig. 8E is a diagram schematically illustrating a state where transport units are arranged in a left-right direction according to Comparative Example 1.
Fig. 9 is a diagram explaining connection relationships between the units in the sample analysis system according to Embodiment 1.
Fig. 10 is a flowchart illustrating processing of one sample rack in the linear transfer part according to Embodiment 1.
Fig. 11 is a flowchart illustrating processing of one sample rack in the linear transfer part according to Embodiment 1.
Fig. 12A is a flowchart illustrating processing of setting a measurement order according to Embodiment 1. Fig. 12B is a flowchart illustrating processing of determining the necessity of a retest according to Embodiment 1.

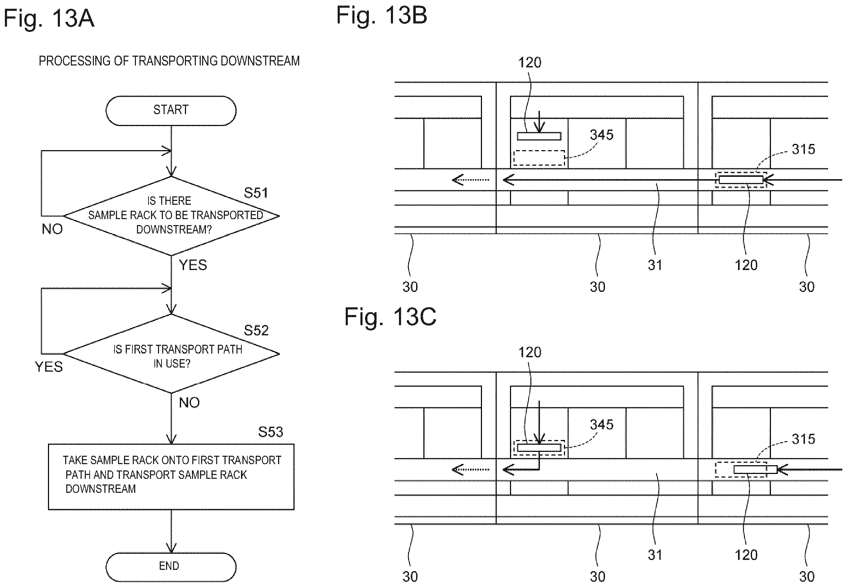

Figs. 13A to 13C are diagrams explaining processing of transporting downstream a sample rack along a first transport path in the transport unit according to Embodiment 1. Fig. 13A is a flowchart illustrating processing of transporting downstream a sample rack that has arrived at a first entrance of the first transport path and a sample rack that has arrived at a second entrance of the first transport path according to Embodiment 1. Fig. 13B is a diagram schematically illustrating how the sample rack that has arrived first at the first entrance of the first transport path according to Embodiment 1 is transported downstream. Fig. 13C is a diagram schematically illustrating how the sample rack that has arrived first at the second entrance of the first transport path according to Embodiment 1 is transported downstream.

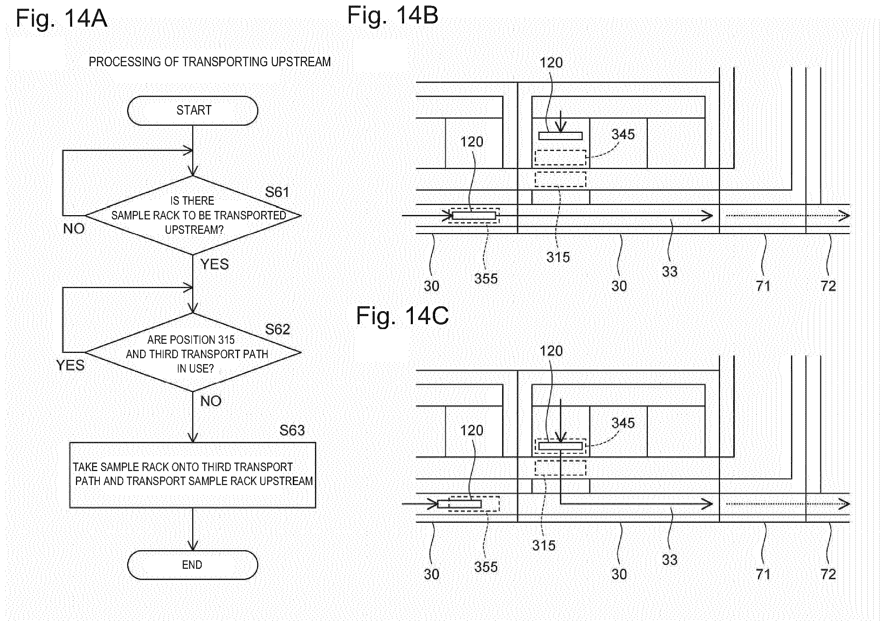

Figs. 14A to 14C are diagrams explaining processing of transporting upstream a sample rack along a third transport path in the transport unit according to Embodiment 1. Fig. 14A is a flowchart illustrating processing of transporting upstream a sample rack that has arrived at an entrance of the third transport path and a sample rack that has arrived at the second entrance of the first transport path according to Embodiment 1. Fig. 14B is a diagram schematically illustrating how the sample rack that has arrived first at the entrance of the third transport path according to Embodiment 1 is transported upstream. Fig. 14C is a diagram schematically illustrating how the sample rack that has arrived first at the second entrance of the first transport path according to Embodiment 1 is transported upstream.
Figs. 15A to 15F are diagrams explaining transfer of sample racks in the linear transfer part according to Embodiment 1.
Figs. 16A to 16F are diagrams explaining transfer of sample racks in the linear transfer part according to Embodiment 1.
Figs. 17A to 17F are diagrams explaining transfer of sample racks in the linear transfer part when there are samples determined to require retests according to Embodiment 1.
Fig. 18 is a diagram schematically illustrating a configuration of a sample analysis system according to Embodiment 2.
Fig. 19 is a diagram schematically illustrating a configuration of a sample analysis system according to Comparative Example 2.
Fig. 20 is a diagram schematically illustrating a configuration of a sample analysis system according to Embodiment 3.
Fig. 21 is a diagram schematically illustrating a configuration of a sample analysis system according to Embodiment 4.
Fig. 22 is a diagram schematically illustrating a configuration of a sample analysis system according to Embodiment 5.

### [Description of Embodiments]

A sample analysis system is used to analyze many samples in an examination room, an examination center, and the like in a hospital. However, a limited installation space in the examination room or examination center sometimes makes it difficult to install such a sample analysis system with a desired processing capability. An embodiment(s) of this disclosure provide a sample analysis system and a sample analysis meothod capable of reducing the installation area of the sample analysis system while maintaining the processing capability thereof.

### <Embodiment 1>

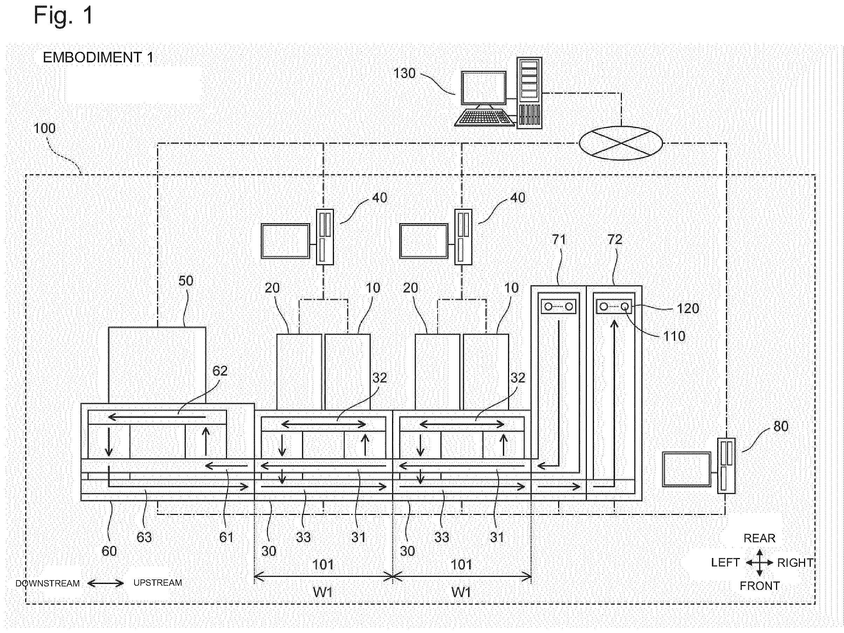

As illustrated in Fig. 1, sample analysis system 100 includes two sets 101, each including first measurement unit 10, second measurement unit 20, transport unit 30, and control unit 40. Each set 101 includes one control unit 40 for first measurement unit 10 and second measurement unit 20. Second measurement unit 20 is disposed adjacent to first measurement unit 10. First measurement unit 10 and second measurement unit 20 are units for counting blood cells in a blood sample. Hereinafter, first measurement unit 10 and second measurement unit 20 are collectively referred to as the "measurement block". Transport unit 30 is disposed to correspond to the measurement block.

Sample analysis system 100 includes processing unit 50, transport unit 60, loader unit 71, collection unit 72, and transport controller 80, besides two sets 101. In Fig. 1, a downstream direction is a direction away from loader unit 71, that is, a leftward direction. An upstream direction is a direction approaching loader unit 71 from the downstream side of loader unit 71, that is, a rightward direction. Sample container 110 contains a sample, and sample rack 120 is configured to be able to hold ten sample containers 110.

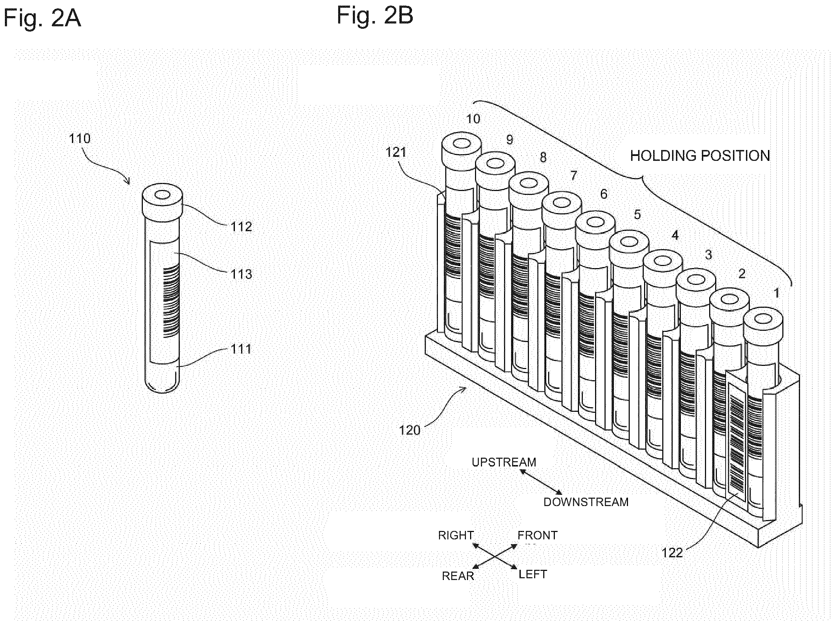

As illustrated in Fig. 2A, sample container 110 includes body part 111, cover part 112, and sample information part 113. Body part 111 is a tubular container made of translucent glass or synthetic resin. Body part 111 contains a whole blood sample collected from a subject, and has its upper end opening sealed by cover part 112 made of rubber. Sample information part 113 is attached on the side of body part 111. Sample information part 113 is a bar-code label with a bar code printed thereon, the bar code indicating a sample ID. The sample ID is identification information capable of individually identifying the sample.

As illustrated in Fig. 2B, sample rack 120 includes ten holders 121 capable of holding sample containers 110 upright, and rack information part 122. Fig. 2B illustrates the upstream and downstream directions during transport of sample rack 120 within sample analysis system 100, as well as front, back, left, and right directions illustrated in Fig. 1. Rack information part 122 is a bar-code label with a bar code printed thereon, the bar code indicating a rack ID. The rack ID is identification information capable of individually identifying sample rack 120. Hereinafter, for convenience, positions of respective holders 121 are referred to as holding positions 1 to 10 from the downstream side to the upstream side in a transport direction.

Note that sample information part 113 is not limited to the bar-code label, but may be an RFID (Radio Frequency Identification) tag that stores the sample ID. Likewise, rack information part 122 is not limited to the bar-code label, but may be an RFID tag that stores the rack ID. When sample information part 113 and rack information part 122 are the RFID tags, an information reader to be described later for reading the sample ID from sample information part 113 and reading the rack ID from rack information part 122 includes an antenna for reading RFID.

Referring back to Fig. 1, two transport units 30, transport unit 60, loader unit 71, and collection unit 72 are disposed adjacent to each other in the left-right direction so as to enable handing over of sample rack 120. These units are configured to be able to transport sample rack 120 along bold arrows. Note that the units are directly connected in the left-right direction as illustrated in Fig. 1, but may also be indirectly connected in the left-right direction through other transport paths or the like. However, in order to reduce the installation area of sample analysis system 100, it is desirable that the adjacent units be directly connected without other transport paths installed between the units.

Transport unit 30 includes: first transport path 31 for receiving sample rack 120 from the upstream side and transporting sample rack 120 to the downstream side; second transport path 32 for transporting sample rack 120 received from first transport path 31 in a first direction from first measurement unit 10 to second measurement unit 20 and in a second direction opposite to the first direction; and third transport path 33 for receiving sample rack 120 from the downstream side and transporting sample rack 120 to the upstream side. In Embodiment 1, the first direction is a direction toward the downstream side, that is, the leftward direction, while the second direction is a direction toward the upstream side, that is, the rightward direction.

A right-hand end of second transport path 32 is connected to the vicinity of an upstream-side end of first transport path 31 through first storage part 321 to be described later. A left-hand end of second transport path 32 is connected to the vicinity of a downstream-side end of first transport path 31 through second storage part 341 to be described later. Second transport path 32 can distribute sample containers 110 held on sample rack 120 to first measurement unit 10 and second measurement unit 20 by moving sample rack 120 back and forth between first and second measurement units 10 and 20.

First and second measurement units 10 and 20 perform measurement of the samples in sample containers 110 by taking sample containers 110 out of sample rack 120 transported along second transport path 32. First and second measurement units 10 and 20 are installed adjacent to each other in the left-right direction. First and second measurement units 10 and 20 are behind transport unit 30, and installed adjacent to transport unit 30. First and second measurement units 10 and 20 have the same unit configuration.

First measurement unit 10 can perform measurement of a CBC item and a DIFF item. Second measurement unit 20 can perform measurement of the CBC item, the DIFF item, and an RET item. The CBC item includes WBC (white blood cell count), RBC (red blood cell count), HGB (hemoglobin content), HCT (hematocrit), MCV (mean corpuscular volume), MCH (mean corpuscular hemoglobin), MCHC (mean corpuscular hemoglobin concentration), PLT (platelet count), and the like. The DIFF item includes NEUT# (neutrophil count), LYMPH# (lymphocyte count), MONO# (monocyte count), EO# (eosinophil count), BASO# (basophil count), and the like. The RET item includes RET# (reticulocyte count) and the like.

In Embodiment 1, first measurement unit 10 measures the CBC item and the DIFF item as an initial test. Second measurement unit 20 measures the CBC item and the DIFF item as an initial test, and measures the RET item as a retest as needed. More specifically, first measurement unit 10 is a measurement unit dedicated for the initial test, while second measurement unit 20 is a measurement unit capable of performing the retest in addition to the initial test. As described above, a combination of items that can be measured by first measurement unit 10 is different from a combination of items that can be measured by second measurement unit 20. Therefore, a combination of reagents connected to first measurement unit 10 is different from a combination of reagents connected to second measurement unit 20.

As in Embodiment 1, when at least one of the two measurement units in set 101 can perform a retest, measurement can be completed by performing both of the initial test and retest in one set 101 for sample rack 120 transported along second transport path 32. This eliminates the necessity of performing a retest in the measurement unit in the stage subsequent to measurement unit set 101, where the initial test has been performed. Thus, transport control of sample rack 120 is simplified.

Moreover, the timing of retest can be made earlier than in the case where the measurement unit in the subsequent stage performs the retest. Thus, the retest can be performed at a timing without having a large gap from the timing of initial test. In a hospital, a facility or the like where sample analysis system 100 is installed, it is desired that final measurement results for samples be obtained in an order close to the order of sample containers 110 loaded on sample analysis system 100. According to Embodiment 1, the gap between the timing of initial test and the timing of retest can be reduced. Thus, the final measurement results can be obtained in the order close to the order of sample containers 110 being transported within sample analysis system 100.

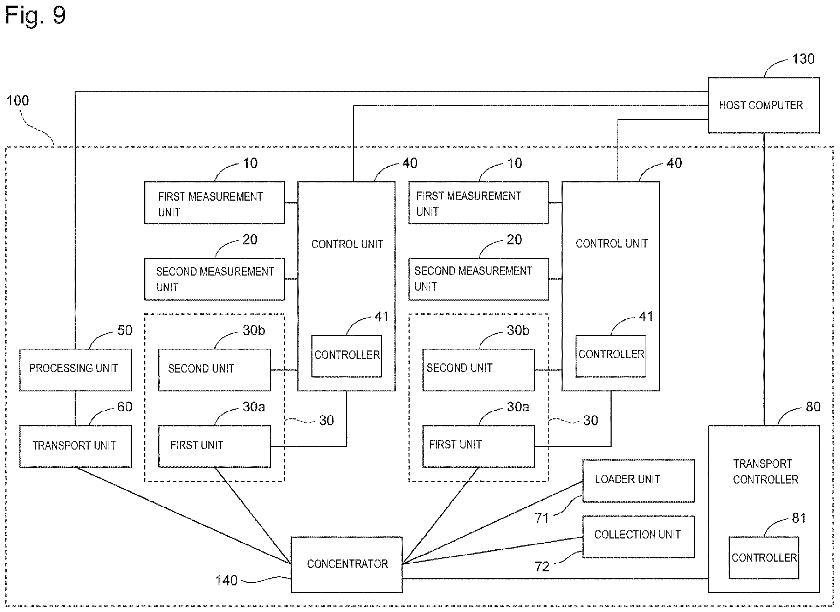

Control unit 40 is communicably connected to the units in the same set 101, and controls the units in the same set 101. To be more specific, control unit 40 controls a measurement operation of the measurement block serving as the set, and controls a transport operation of second unit 30b. Second unit 30b is a part of transport unit 30 as described later with reference to Fig. 9. Control unit 40 controls the operation of second unit 30b to transport sample rack 120 along second transport path 32. Moreover, control unit 40 receives sample measurement data from first and second measurement units 10 and 20 in the same set 101, and generates sample measurement results corresponding to the measurement items.

Control unit 40 is provided for each set 101, and control units for respective sets 101 perform the same control. This saves the trouble of significantly changing control programs of respective control units 40 according to an increase or decrease in the number of sets 101. Thus, the number of sets 101 to be disposed in sample analysis system 100 can be easily increased or decreased.

Transport unit 60 includes: first transport path 61 for receiving sample rack 120 from the upstream side and transporting sample rack 120 to the downstream side; second transport path 62 for supplying sample rack 120 received from first transport path 61 to processing unit 50; and third transport path 63 for receiving sample rack 120 from the downstream side and second transport path 62 and transporting sample rack 120 to the upstream side. Processing unit 50 is an apparatus for preparing a smear of the sample. Processing unit 50 aspirates the sample from sample container 110 held on sample rack 120 transported along second transport path 62, and prepares a smear of the aspirated sample.

Loader unit 71 is disposed on the upstream side of most upstream transport unit 30, and is a unit where to load sample rack 120 to be processed by sample analysis system 100, that is, sample rack 120 holding sample containers 110 containing samples yet to be measured. Collection unit 72 is disposed on the upstream side of loader unit 71, and collects sample rack 120 finished with the measurement through third transport path 33 and sample rack 120 finished with the smear preparation through third transport path 63. More specifically, collection unit 72 is a unit for collecting sample rack 120 transported to the upstream side along third transport paths 33 and 63.

Transport controller 80 is an apparatus for determining a transport destination of sample rack 120 loaded on loader unit 71 and managing the transport of sample rack 120. Transport controller 80 controls the transport units such that the transport units transport one of sample racks 120 loaded on loader unit 71 to the measurement block in the right-hand set 101 and transport another one of the sample racks 120 to the measurement block in the left-hand set 101.

To be more specific, transport controller 80 instructs first unit 30a, transport unit 60, loader unit 71, and collection unit 72 to transport sample racks 120. First unit 30a is a part of transport unit 30 as described later with reference to Fig. 9. Thus, sample racks 120 are transported along first transport paths 31, third transport paths 33, first transport path 61, second transport path 62, and third transport path 63, and sample racks 120 are transported within loader unit 71 and collection unit 72.

Control units 40, processing unit 50, and transport controller 80 are communicably connected to host computer 130 through a communication network.

Next, description is given of processing of one sample rack 120 by sample analysis system 100.

Sample rack 120 holding sample containers 110 is placed on the transport path in loader unit 71 by an operator. Sample rack 120 is transported forward within loader unit 71 and then discharged to the downstream side. In this event, transport controller 80 sets the transport destination of sample rack 120 to be discharged from loader unit 71 to either one of two sets 101. Transport controller 80 sets the transport destination of sample rack 120 so as to balance measurement load in two sets 101. The reason why such load balancing between two sets 101 can be achieved is that two sets 101 have the same unit configuration, measurement items, procedure for transporting sample rack 120 within set 101, and the like.

Sample rack 120 discharged from loader unit 71 is conveyed onto first transport path 31 in transport unit 30 on the downstream side.

Sample rack 120 conveyed onto first transport path 31 is transported to the left along first transport path 31 when the transport destination thereof is not set 101 in which sample rack 120 is being transported, and then discharged to first transport path 31 in transport unit 30 adjacent on the downstream side or first transport path 61 in transport unit 60.

Sample rack 120 conveyed onto first transport path 31 is transported along second transport path 32 when the transport destination thereof is set 101 in which sample rack 120 is being transported, and then an initial test and a retest are performed in this set 101. Each of sample containers 110 on sample rack 120 transported along second transport path 32 is taken into either one of first measurement unit 10 and second measurement unit 20 for the initial test. Control unit 40 determines the necessity of a retest based on the measurement result of the initial test. Sample container 110 that requires a retest is taken into second measurement unit 20 for the retest. Control unit 40 transmits the results of the initial test and the retest to host computer 130.

Upon completion of the initial tests and required retests for all sample containers 110 on sample rack 120, transport controller 80 makes an inquiry to host computer 130 about whether or not processing unit 50 needs to prepare a smear for each of sample containers 110 held on sample rack 120.

When sample rack 120 includes sample container 110 that requires the smear preparation, the transport destination of this sample rack 120 is processing unit 50. Then, this sample rack 120 is transported to the left along first transport path 31 and discharged to first transport path 31 in transport unit 30 adjacent on the downstream side or first transport path 61 in transport unit 60. On the other hand, when sample rack 120 includes no sample container 110 that requires the smear preparation, the transport destination of this sample rack 120 is collection unit 72. Then, this sample rack 120 is transported forward across first transport path 31 and transported to the right along third transport path 33. Thereafter, sample rack 120 is transported to collection unit 72 and stored in collection unit 72.

Sample rack 120 conveyed onto first transport path 61 is transported along second transport path 62. Processing unit 50 aspirates the sample from sample container 110 that requires the smear preparation, and prepares a smear of the aspirated sample. Upon completion of the smear preparation for all sample containers 110 that require the smear preparation on sample rack 120, the transport destination of this sample rack 120 is collection unit 72. Then, this sample rack 120 is transported forward across first transport path 61 and transported to the right along third transport path 63. Thereafter, sample rack 120 is transported to collection unit 72 and stored in collection unit 72. The processing for one sample rack 120 is thus completed.

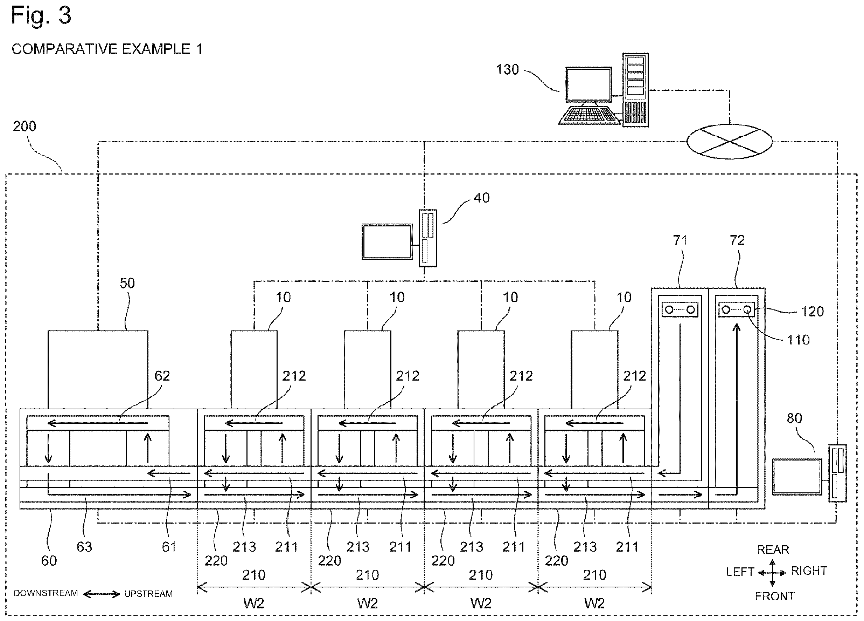

Here, as illustrated in Fig. 1, four measurement units in total are disposed in sample analysis system 100 according to Embodiment 1, and two measurement units are installed for one transport unit 30. On the other hand, as illustrated in Fig. 3, while four measurement units in total are disposed in sample analysis system 200 according to Comparative Example 1 as in the case of Embodiment 1, one measurement unit is installed for one transport unit.

Sample analysis system 200 according to Comparative Example 1 includes four sets 210 instead of two sets 101 in Embodiment 1. Each of sets 210 includes first measurement unit 10, which is the same as that in Embodiment 1, and transport unit 220 having a width different from that of transport unit 30 in Embodiment 1. Sample analysis system 200 according to Comparative Example 1 includes one control unit 40, which is the same as that in Embodiment 1. This control unit 40 controls four sets 210. As in the case of transport unit 30, transport unit 220 includes first transport path 211, second transport path 212, and third transport path 213. In Comparative Example 1, the width of one transport unit 220 in the left-right direction is set to W2 as illustrated in Fig. 3 so as to facilitate transport of sample rack 120 on second transport path 212 and to improve measurement efficiency in first measurement unit 10.

Likewise, in Embodiment 1, the width of one transport unit 30 in the left-right direction is set to W1 as illustrated in Fig. 1 so as to facilitate the transport of sample rack 120 on second transport path 32 and to improve measurement efficiency in one set 101. As described above, when W1 is set in Embodiment 1 and W2 is set in Comparative Example 1 in terms of improving the measurement efficiency, the relationship between W1 and W2 is W1<2×W2. More specifically, width W1 of the transport unit required for the two measurement units in Embodiment 1 is smaller than width 2×W2 of the transport units required for the two measurement units in Comparative Example 1.

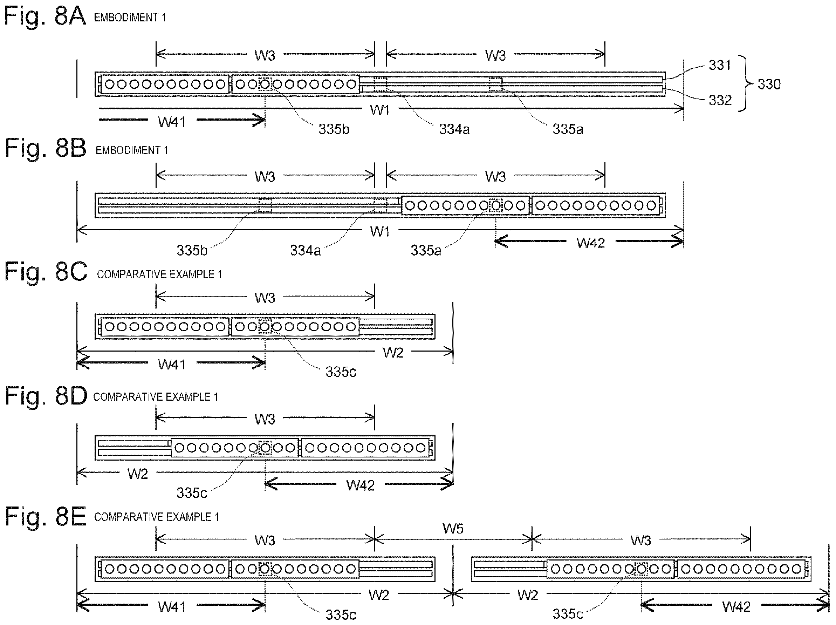

Therefore, total width 2×W1 of the transport units corresponding to the four measurement units in sample analysis system 100 according to Embodiment 1 is smaller than total width 4×W2 of the transport units corresponding to the four measurement units in sample analysis system 200 according to Comparative Example 1. Also, width W1 of transport unit 30 in Embodiment 1 is set so as to facilitate the transport of sample rack 120 on second transport path 32 and to improve the measurement efficiency in one set 101. Therefore, according to Embodiment 1, the installation area of the sample analysis system can be made smaller than in Comparative Example 1 while maintaining sample processing capability at the same level as in Comparative Example 1. The setting of widths W1 and W2 is described later with reference to Figs. 8A to 8E.

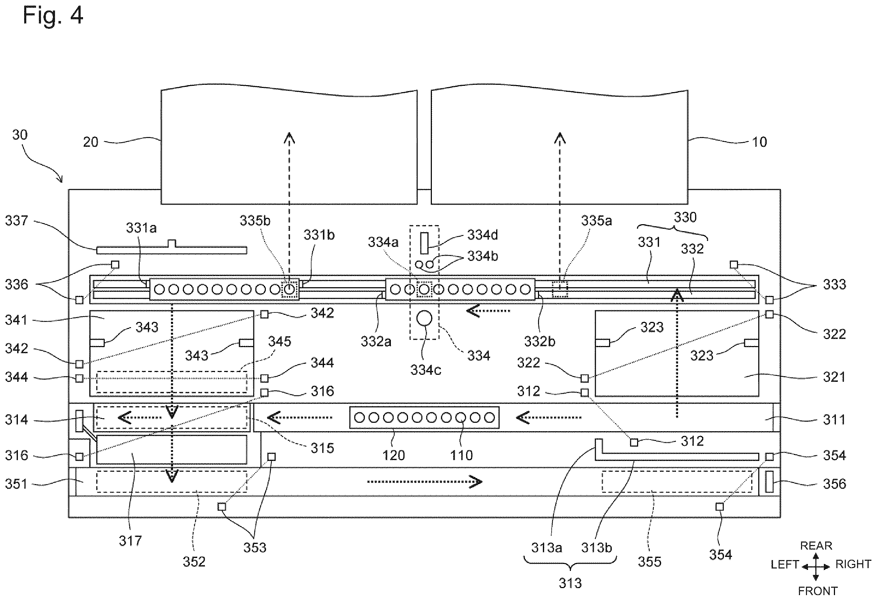

As illustrated in Fig. 4, first transport path 31 includes belts 311 and 314. Second transport path 32 includes linear transfer part 330. Third transport path 33 includes belt 351.

First storage part 321 is a table-shaped plate member with its upper surface parallel to a horizontal plane. First storage part 321 is disposed between first transport path 31 and second transport path 32, stores sample rack 120 received from first transport path 31, and supplies sample rack 120 onto second transport path 32. Linear transfer part 330 includes transporting devices 331 and 332. Linear transfer part 330 transfers sample rack 120 along first measurement unit 10 and second measurement unit 20. Second storage part 341 is a table-shaped plate member with its upper surface parallel to the horizontal plane. Second storage part 341 is disposed between first transport path 31 and second transport path 32, stores sample rack 120 received from second transport path 32, and supplies sample rack 120 onto first transport path 31.

With first and second storage parts 321 and 341 provided, the timing of feeding sample rack 120 onto second transport path 32 and the timing of discharging sample rack 120 from second transport path 32 can be flexibly set. Thus, sample rack 120 can be smoothly transported on second transport path 32.

Each of first and second storage parts 321 and 341 has a length that can accommodate sample rack 120 in the front-back direction. In Embodiment 1, there is a case where sample rack 120 to be transported to the downstream side or the upstream side waits in second storage part 341 depending on congestion on first transport path 31 and third transport path 33. Therefore, in Embodiment 1, the front-back length of second storage part 341 is determined so as to enable storage of sample rack 120 in second storage part 341.

Here, in Comparative Example 1 illustrated in Fig. 3, sample rack 120 needs to be transported to the downstream side in a case of a retest. Therefore, sample rack 120 more frequently waits in second storage part 341. On the other hand, in Embodiment 1, less sample racks 120 are discharged to the downstream side from second storage part 341 since an initial test and a retest are completed in one set 101. Therefore, in Embodiment 1, the front-back length of first and second storage parts 321 and 341 may be set to a length that can accommodate one sample rack 120. Such a reduction in the front-back length of first and second storage parts 321 and 341 can further reduce the installation area of sample analysis system 100.

Note that, since it is assumed in Embodiment 1 that set 101 is independently used, first storage part 321 and second storage part 341 are each configured to be able to store three sample racks 120. When it is not assumed that set 101 is independently used, first storage part 321 and second storage part 341 may have a length in the front-back direction that can store one sample rack 120.

Belt 311 transports sample rack 120 discharged from the upstream side to the left. Sensors 312 detect sample rack 120 located at a rightmost position of belt 311.

Rack feeder 313 can feed sample rack 120 transported along first transport path 31 to first storage part 321. Rack feeder 313 can move between a retreat position where the transport of sample rack 120 along first transport path 31 is not hindered and a stop position where sample rack 120 transported along first transport path 31 is stopped. Also, rack feeder 313 can feed sample rack 120 stopped at the stop position to first storage part 321. Rack feeder 313 includes: stopper 313a having a plane perpendicular to the left-right direction; and thruster 313b having a plane perpendicular to the front-back direction.

To be more specific, when sample rack 120 conveyed onto belt 311 from the upstream side is to be transported to second transport path 32, rack feeder 313 is positioned at the stop position, and only stopper 313a is positioned on belt 311. Thus, sample rack 120 transported to the left on belt 311 is stopped at the rightmost position on belt 311 by stopper 313a. Subsequently, when rack feeder 313 is moved backward in this state, the front surface of sample rack 120 located at the rightmost position on belt 311 is pushed by thruster 313b to feed sample rack 120 to first storage part 321. When sample rack 120 conveyed onto belt 311 from the upstream side is to be transported to the downstream side, rack feeder 313 is positioned at the retreat position and retreated from belt 311, as illustrated in Fig. 4.

Belt 314 is disposed at position 315 to the left of belt 311 and in front of second storage part 341. Sensors 316 detect sample rack 120 positioned at position 315. Belt 314 transports sample rack 120 at position 315 to the left and discharges sample rack 120 to the downstream side of transport unit 30. Stopper 317 can prevent sample rack 120 at position 315 from being transported to the left and forward by having its upper surface lifted above upper surfaces of belts 311 and 314. When transport unit 30 is disposed to the left, position 315 is a first entrance of first transport path 31 in transport unit 30 disposed to the left, that is, a position for conveying sample rack 120 onto first transport path 31 on the downstream side from the upstream side.

Sensors 322 detect sample rack 120 on first storage part 321. Feed mechanism 323 feeds sample rack 120 to the rightmost position of linear transfer part 330 by pushing left and right ends of the front surface of sample rack 120. Sensors 333 detect sample rack 120 located at the rightmost position of linear transfer part 330.

Transporting devices 331 and 332 in linear transfer part 330 include belts. Transporting devices 331 and 332 independently transport sample rack 120 in a first direction and a second direction. Transporting devices 331 and 332 extend in the left-right direction and are disposed side by side in the front-back direction. Transporting devices 331 and 332 are positioned between the front and back surfaces of sample rack 120 on transporting devices 331 and 332. Transporting devices 331 and 332 are driven separately by unillustrated two stepping motors . Transporter 331 is provided with protrusions 331a and 331b, between which sample rack 120 is fitted. Transporter 332 is provided with protrusions 332a and 332b, between which sample rack 120 is fitted. Sample rack 120 is transported to the left and right along with driving of transporter 331 by being fitted between protrusions 331a and 331b, and is transported to the left and right along with driving of transporter 332 by being fitted between protrusions 332a and 332b.

With transporting devices 331 and 332 thus configured, when two sample racks 120 are positioned on transporting devices 331 and 332 as illustrated in Fig. 4, two sample racks 120 can be transported separately in the first and second directions. Hereinafter, sample rack 120 to be transported first on second transport path 32 is referred to as the "preceding rack", and sample rack 120 to be transported on second transport path 32 immediately after the preceding rack is referred to as the "following rack".

In Embodiment 1, transport unit 30 supplies the following rack from first storage part 321 to second transport path 32 and transports the following rack in the first direction by transporter 332 before sending the preceding rack to second storage part 341, the preceding rack being finished with the supply of all sample containers 110 transported by transporter 331 to the measurement block. More specifically, as illustrated in Fig. 4, measurement processing of the preceding rack is performed with linear transfer part 330, and measurement processing of the following rack is also concurrently performed with linear transfer part 330.

Note that, in Embodiment 1, the measurement block in set 101 includes the two measurement units. Alternatively, the measurement block may include three or more measurement units. For example, when the measurement block in set 101 includes three measurement units, one transporter having the same configuration as that of transporting devices 331 and 332 is added, and the three transporting devices are installed side by side in the front-back direction. In this case, the three transporting devices are driven separately by different stepping motors, and three sample racks 120 are transferred separately on the three transporting devices. Thus, second transport path 32 distributes sample containers 110 held on sample rack 120 to the measurement blocks by moving sample rack 120 back and forth among the three measurement units.

In Embodiment 1, transporting devices 331 and 332 include the belts. Alternatively, transporting devices 331 and 332 may include protrusions. In this case, when sample rack 120 is fed onto second transport path 32 from first storage part 321, the protrusions are engaged with a lower surface of sample rack 120. Then, sample rack 120 is transported in the left-right direction by movement of the protrusions in the left-right direction. When sample rack 120 is discharged to second storage part 341 from second transport path 32, the protrusions engaged with the lower surface of sample rack 120 are retreated downward, and then sample rack 120 is sent to second storage part 341.

Information reading unit 334 is installed around the center of linear transfer part 330 in the left-right direction. Information reading unit 334 detects whether or not there is sample container 110 in holder 121 on sample rack 120 located at reading position 334a on linear transfer part 330. To be more specific, rollers 334b are brought closer to roller 334c, and when a distance between rollers 334b and roller 334c becomes smaller than a predetermined value, it is determined that there is no sample container 110 in holder 121.

When holder 121 holds sample container 110, information reading unit 334 drives roller 334c to rotate sample container 110 at reading position 334a, and uses information reader 334d to read the sample ID from sample information part 113 on sample container 110. Moreover, information reading unit 334 uses information reader 334d to read the rack ID from rack information part 122 in sample rack 120 located at reading position 334a. Information reader 334d is a bar code reader.

Sample rack 120 is transported by transporter 331 or transporter 332, and sample container 110 to be measured is positioned at take-out position 335a or take-out position 335b on transporting devices 331 and 332.

An unillustrated catcher in first measurement unit 10 takes sample container 110 at take-out position 335a out of sample rack 120 into first measurement unit 10. Upon completion of the aspiration of the sample in sample container 110 in first measurement unit 10, the catcher in first measurement unit 10 returns sample container 110 to holder 121 on sample rack 120. Likewise, an unillustrated catcher in second measurement unit 20 takes sample container 110 at take-out position 335b out of sample rack 120 into second measurement unit 20. Upon completion of the aspiration of the sample in sample container 110 in second measurement unit 20, the catcher in second measurement unit 20 returns sample container 110 to holder 121 on sample rack 120.

In the event of an initial test, sample containers 110 held on sample rack 120 are taken sequentially from leftmost holding position 1 to rightmost holding position 10 into first measurement unit 10 or second measurement unit 20 for sample measurement. In this event, the measurement unit into which sample containers 110 are taken is determined so as to balance load on first measurement unit 10 or second measurement unit 20. For example, sample containers 110 at the odd-numbered holding positions are taken into second measurement unit 20, and sample containers 110 at the even-numbered holding positions are taken into first measurement unit 10. When it is determined based on the measurement result of the initial test that a retest is required, it is waited for another sample container 110 to be taken into second measurement unit 20 to be returned to original holder 121. Then, sample container 110 determined to require a retest is taken into second measurement unit 20 for the retest.

Sensors 336 detect sample rack 120 located at the leftmost position of linear transfer part 330. Upon completion of all the initial tests and required retests of the samples in all sample containers 110 held on sample rack 120, this sample rack 120 is pushed forward by rack feeder 337. Rack feeder 337 pushes the back surface of sample rack 120 located at the leftmost position of linear transfer part 330, thereby feeding sample rack 120 to second storage part 341.

Sensors 342 detect sample rack 120 on second storage part 341. Feed mechanism 343 feeds sample rack 120 to position 315 or leftmost position 352 of belt 351 by pushing left and right ends of the back surface of sample rack 120. Sensors 344 detect sample rack 120 located at position 345 in the front of second storage part 341. Position 345 is a second entrance of first transport path 31, that is, a position for discharging sample rack 120 onto first transport path 31 from second storage part 341. When sample rack 120 is fed into second storage part 341 by rack feeder 337, transport controller 80 sets the transport destination of this sample rack 120 as described above. When the transport destination is processing unit 50, sample rack 120 is fed to position 315 by feed mechanism 343. When the transport destination is collection unit 72, sample rack 120 is fed to position 352 by feed mechanism 343.

Belt 351 transports sample rack 120 discharged from the downstream side and located at position 352 and sample rack 120 fed from second storage part 341 and located at position 352 to the right. Sensors 353 detect sample rack 120 located at position 352. Sensors 354 detect sample rack 120 located at rightmost position 355 on belt 351. Stopper 356 can prevent sample rack 120 at position 355 from being transported to the right by having its upper surface lifted above an upper surface of belt 351. When transport unit 30 is disposed to the right, position 355 is an entrance of third transport path 33 in transport unit 30 disposed to the right, that is, a position for conveying sample rack 120 onto third transport path 33 on the upstream side from the downstream side.

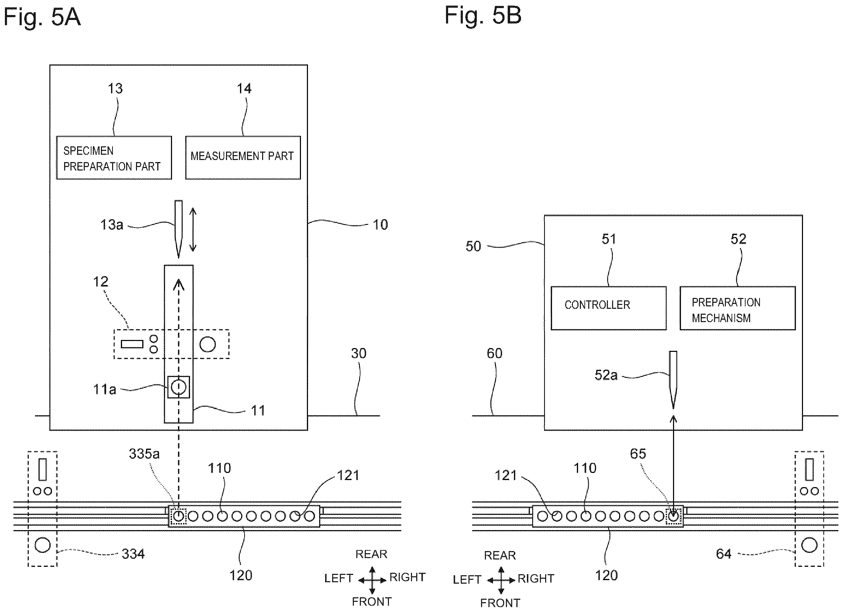

As illustrated in Fig. 5A, first measurement unit 10 includes container transfer part 11, information reading unit 12, specimen preparation part 13, and measurement part 14. Container transfer part 11 includes: holder 11a capable of holding sample container 110 upright; and an unillustrated mechanism for transferring holder 11a in the front-back direction. Sample container 110 taken out at take-out position 335a is set in holder 11a and transported back and forth. Information reading unit 12 is disposed around the center of container transfer part 11, and has the same configuration as that of information reading unit 334. Information reading unit 12 detects whether or not there is sample container 110 in holder 11a. When holder 11a holds sample container 110, information reading unit 12 reads the sample ID from sample information part 113 on sample container 110.

Specimen preparation part 13 includes piercer 13a. Specimen preparation part 13 aspirates the sample through piercer 13a from sample container 110 held by holder 11a, and prepares a measurement specimen from the aspirated sample and a predetermined reagent connected to specimen preparation part 13. Measurement part 14 includes an optical detector, an electrical-resistance-type detector, and a hemoglobin measurement part to perform measurement of the measurement specimen. Upon completion of the sample aspiration, sample container 110 is transported forward and returned to holder 121.

Second measurement unit 20 has the same configuration as that of first measurement unit 10. More specifically, sample container 110 located at take-out position 335b is taken into second measurement unit 20. A measurement specimen is prepared from a sample aspirated from sample container 110 and a predetermined reagent, and measurement of the measurement specimen is performed. Upon completion of the sample aspiration, sample container 110 is returned to holder 121.

Note that, in the case of processing unit 50, the sample is aspirated directly from sample container 110 on second transport path 62. On second transport path 62 in transport unit 60, information reading unit 64, which is the same as information reading unit 334, is installed as illustrated in Fig. 5B. Processing unit 50 includes controller 51 and preparation mechanism 52. Preparation mechanism 52 includes piercer 52a. When sample container 110 as a target for smear preparation is positioned at aspirating position 65, controller 51 controls preparation mechanism 52 to aspirate the sample through piercer 52a from sample container 110 and prepare a smear based on the aspirated sample.

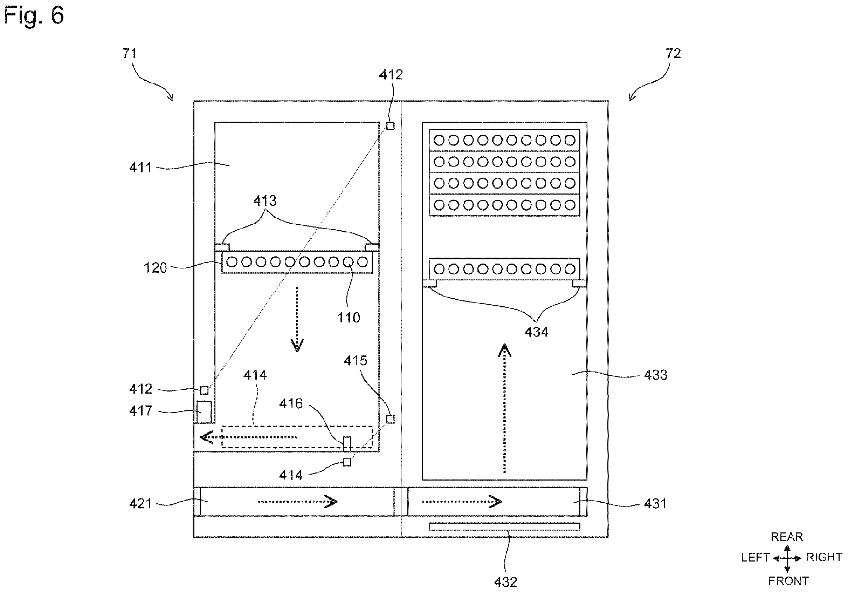

As illustrated in Fig. 6, feed storage part 411 is a table-shaped plate member that is elongated in the front-back direction. Sensors 412 detect sample rack 120 placed in feed storage part 411. Feed mechanism 413 feeds sample rack 120 to position 414 in the front of feed storage part 411 by pushing left and right ends of the back surface of sample rack 120. Sensors 415 detect sample rack 120 located at position 414. Position 414 is a position for conveying sample rack 120 onto first transport path 31 on the downstream side from the upstream side.

Rack feeder 416 pushes the right side surface of sample rack 120, thereby discharging sample rack 120 located at position 414 onto first transport path 31 in transport unit 30 on the downstream side. Information reader 417 is a bar code reader. Information reader 417 reads the rack ID from rack information part 122 on sample rack 120 at position 414. Belt 421 discharges sample rack 120 conveyed from transport unit 30 on the downstream side to collection unit 72 on the upstream side.

Belt 431 positions sample rack 120 conveyed from loader unit 71 on the downstream side in the front of collection unit 72. Rack feeder 432 feeds sample rack 120 into collection storage part 433 by pushing the front surface of sample rack 120 located on belt 431. Collection storage part 433 is a table-shaped plate member that is elongated in the front-back direction. Feed mechanism 434 feeds sample rack 120 to the back of collection storage part 433 by pushing left and right ends of the front surface of sample rack 120.

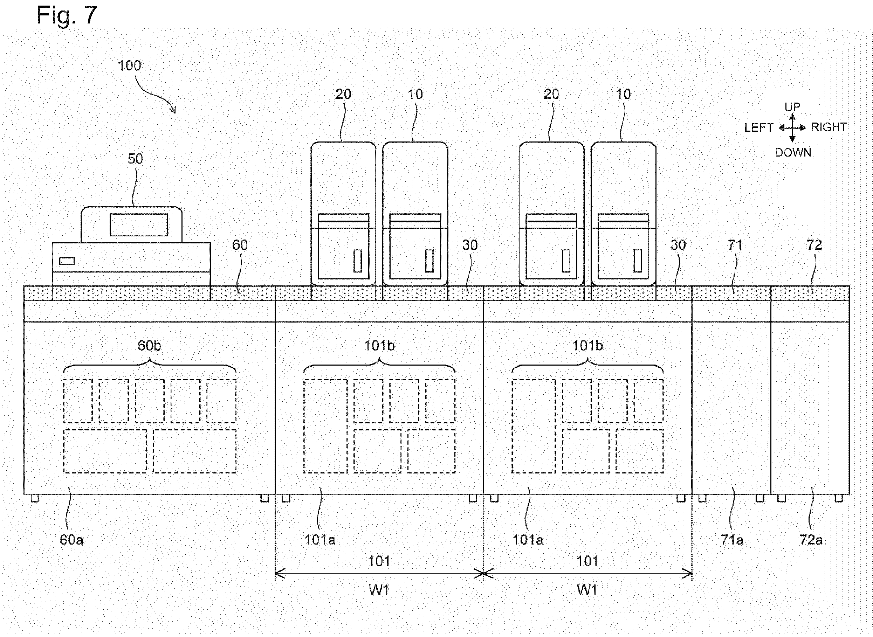

As illustrated in Fig. 7, sample analysis system 100 includes mount parts 71a, 72a, 60a, and 101a. Loader unit 71 is mounted above mount part 71a, and collection unit 72 is mounted above mount part 72a. Processing unit 50 and transport unit 60 are mounted above mount part 60a. Mount part 60a houses reagent containers 60b. Each of reagent containers 60b contains a reagent such as a staining solution for use in smear preparation in processing unit 50.

Mount part 101a is disposed for each set 101. First measurement unit 10, second measurement unit 20, and transport unit 30 in corresponding set 101 are mounted above mount part 101a. Mount part 101a houses reagent containers 101b. Reagent containers 101b contain reagents for use in preparation of a measurement specimen, cleaning the inside of the units, and the like in first and second measurement units 10 and 20.

Reagent containers 101b in mount part 101a includes reagent container 101b that contains a reagent to be used by both of first and second measurement units 10 and 20 and reagent container 101b that contains a reagent to be used only by second measurement unit 20. Reagent container 101b containing the reagent to be used by both of the units is connected to both of specimen preparation part 13 in first measurement unit 10 and specimen preparation part 13 in second measurement unit 20. Reagent container 101b containing the reagent to be used only by second measurement unit 20 is connected to only specimen preparation part 13 in second measurement unit 20.

As described above, one mount part 101a houses the reagent to be used by both of first and second measurement units 10 and 20 in corresponding set 101. Thus, the number of reagent containers 101b is reduced compared with a case where reagent container 101b that houses a reagent to be used by first measurement unit 10 and reagent container 101b that houses a reagent to be used by second measurement unit 20 are separately disposed. Thus, a space for housing reagent containers 101b can be saved. As a result, the installation area of sample analysis system 100 can be reduced.

Next, with reference to Figs. 8A to 8E, description is given of the fact that width W1 of one transport unit 30 in Embodiment 1 is smaller than width 2×W2 of two transport units 220 in Comparative Example 1. A left-right width of first measurement unit 10 and a left-right width of second measurement unit 20 are both set to W3.

Even after completion of initial tests for all sample containers 110 on the preceding rack, the preceding rack needs to stay in linear transfer part 330 until all sample containers 110 on the preceding rack undergo the process of determining whether a retest is necessary. In this event, it takes a predetermined period of time to determine whether a retest is necessary for sample container 110, for which the initial test is performed last. Therefore, in order to improve the measurement efficiency, the following rack is fed into linear transfer part 330 in the meantime, and an initial test for the following rack is started.

As illustrated in Fig. 8A, it is assumed in Embodiment 1 that second measurement unit 20 positioned on the left side performs measurement for sample container 110 at holding position 3 on the following rack before the necessity of a retest of the sample is determined, for which the initial test is performed last on the preceding rack. In this event, the preceding rack on standby is retreated to the left of the following rack, so that holding position 3 on the following rack is positioned at take-out position 335b. In Embodiment 1, holding position 3 on the following rack can be positioned at take-out position 335b by retreating the preceding rack. Moreover, the position of linear transfer part 330 is determined so as to reduce a distance between the leftmost position on linear transfer part 330 and take-out position 335b. Thus, a distance between the left end of transport unit 30 and take-out position 335b is set to W41.

On the other hand, when it is determined that a retest is required for the preceding rack, after the following rack is fed to linear transfer part 330, sample container 110 containing a sample determined to require a retest needs to be positioned at the take-out position in the measurement unit capable of performing retests. In Embodiment 1, as described above, second measurement unit located on the left performs retests, and first measurement unit 10 located on the right performs only initial tests. However, depending on the setting of measurement by first measurement unit 10 and second measurement unit 20 in a facility or the like where sample analysis system 100 is installed, first measurement unit 10 located on the right sometimes performs retests. Therefore, it is required to assume that sample container 110 as a retest target is positioned at both of take-out positions 335a and 335b.

As illustrated in Fig. 8B, for the reason described above, it is assumed in Embodiment 1 that first measurement unit 10 located on the right performs a retest on sample container 110 in holding position 8 on the preceding rack. In this event, the following rack is retreated to the right of the preceding rack, so that holding position 8 on the preceding rack is positioned at take-out position 335a. In Embodiment 1, holding position 8 on the preceding rack can be positioned at take-out position 335a by retreating the following rack. Moreover, the rightmost position on linear transfer part 330 is determined so as to reduce a distance between the rightmost position on linear transfer part 330 and take-out position 335a. Thus, a distance between the right end of transport unit 30 and take-out position 335a is set to W42.

Since first measurement unit 10 and second measurement unit 20 are installed adjacent to each other in the left-right direction as described above, a distance between take-out positions 335a and 335b is approximately W3. Therefore, width W1 of transport unit 30 in the left-right direction is equal to W41+W3+W42.

As illustrated in Fig. 8C, it is also assumed in Comparative Example 1 that first measurement unit 10 performs measurement for sample container 110 at holding position 3 on the following rack before the necessity of a retest of the sample is determined, for which the initial test is performed last on the preceding rack. Therefore, a distance between the left end of transport unit 220 and take-out position 335c is set to W41. Moreover, as illustrated in Fig. 8D, it is also assumed in Comparative Example 1 that first measurement unit 10 performs a retest on sample container 110 at holding position 8 on the preceding rack. Therefore, a distance between the right end of transport unit 220 and take-out position 335c is set to W42.

As illustrated in Fig. 8E, in the case of Comparative Example 1, assuming that a distance between two first measurement units 10 is W5, left-right width 2×W2 of two transport units 220 corresponding to two first measurement units 10 is equal to W41+W3+W5+W41.

As described above, as is clear from the comparison of Figs . 8A, 8B, and 8E, the left-right width of the transport unit corresponding to the two measurement units in Embodiment 1 is smaller than that in Comparative Example 1 by W5. Moreover, in Embodiment 1, sample containers 110 can be smoothly supplied to the measurement units, and retests on the preceding rack and initial tests on the following rack can be concurrently performed. Thus, the same measurement efficiency as that in Comparative Example 1 can be achieved. Therefore, according to Embodiment 1, the installation area of the sample analysis system can be made smaller than in Comparative Example 1 while maintaining the sample processing capability at the same level as in Comparative Example 1.

Next, description is given of connection relationships between the respective units in sample analysis system 100.

As illustrated in Fig. 9, transport unit 30 is illustrated as being divided into first unit 30a and second unit 30b. First unit 30a includes belt 311, sensors 312, rack feeder 313, belt 314, sensors 316, stopper 317, sensors 342, feed mechanism 343, sensors 344, belt 351, sensors 353, 354, stopper 356, all of which are illustrated in Fig. 4, and a mechanism for driving such mechanisms. Second unit 30b includes sensors 322, feed mechanism 323, linear transfer part 330, sensors 333, information reading unit 334, sensors 336, rack feeder 337, and a mechanism for driving such mechanisms.

Control unit 40 includes controller 41. Controller 41 includes a CPU and a memory. The memory includes, for example, a RAM, a ROM, a hard disk, and the like. Control unit 40 is communicably connected to first measurement unit 10, second measurement unit 20, first unit 30a, and second unit 30b. Processing unit 50 is communicably connected to transport unit 60. Concentrator 140 includes a HUB. Concentrator 140 is communicably connected to first unit 30a, transport unit 60, loader unit 71, collection unit 72, and transport controller 80.

Transport controller 80 includes controller 81. Controller 81 includes a CPU and a memory. The memory includes, for example, a RAM, a ROM, a hard disk, and the like. Controller 81 controls transport of sample rack 120 by transmitting a transport instruction to first unit 30a, transport unit 60, loader unit 71, and collection unit 72 through concentrator 140. Controller 81 communicates with control unit 40 through concentrator 140 and first unit 30a. Controller 81 also stores map information indicating a transport position of each sample rack 120, based on detection signals from the sensors in the respective units that transport sample rack 120.

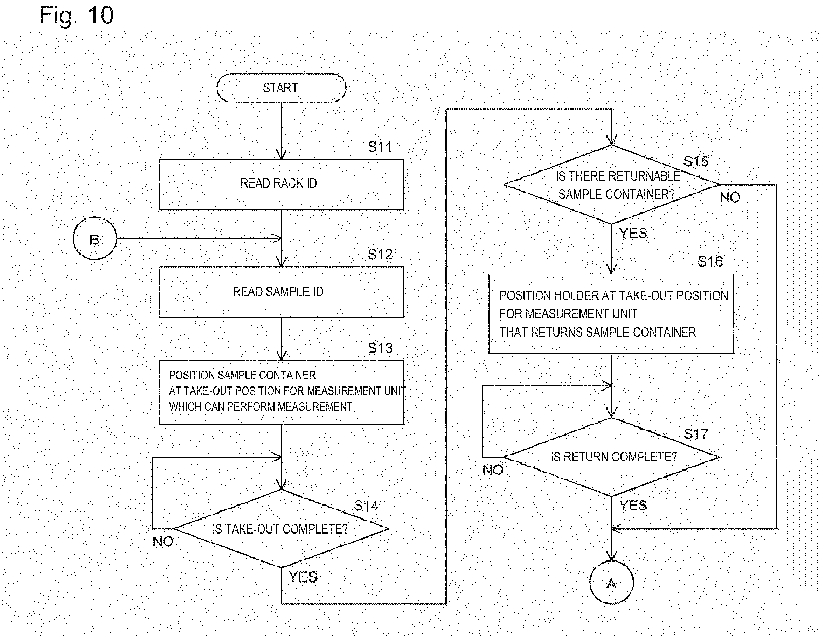

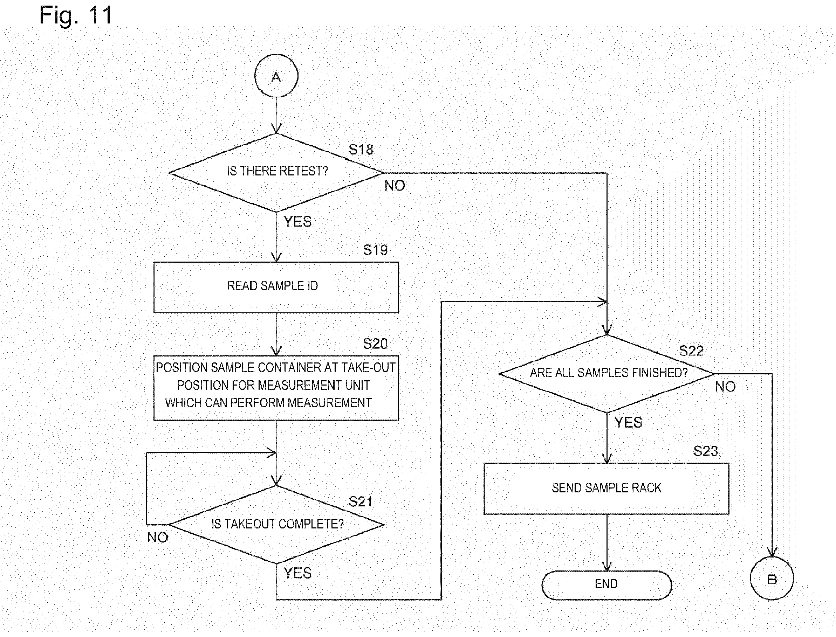

With reference to Figs. 10 and 11, description is given of processing of one sample rack 120 in linear transfer part 330. The transport of sample rack 120 in linear transfer part 330 is performed by controller 41 in control unit 40 controlling the stepping motors for driving transporting devices 331 and 332 in linear transfer part 330.

As illustrated in Fig. 10, in Step S11, controller 41 positions rack information part 122 on sample rack 120 at reading position 334a and reads the rack ID from rack information part 122 using information reader 334d. Subsequently, controller 41 sets holding position 1 as a detection target, positions the holding position as the detection target at reading position 334a, and detects whether or not there is sample container 110. When there is no sample container 110 at the holding position as the detection target, controller 41 increments a value of the detection target by 1. Then, controller 41 positions a holding position as a newly set detection target at reading position 334a again, and detects whether or not there is sample container 110. Note that, when the value of the detection target exceeds 10, that is, when initial tests are completed for all sample containers 110, processing of Steps S12 to S14 is skipped.

When there is sample container 110 at the holding position as the detection target, controller 41 uses information reader 334d to read the sample ID from sample information part 113 on sample container 110 at the holding position in Step S12. Then, in Step S13, controller 41 positions this sample container 110 at a take-out position in either one of first measurement unit 10 and second measurement unit 20, which can perform measurement. Thereafter, controller 41 controls the measurement unit to take sample container 110 located at the take-out position into the measurement unit for an initial test. In Step S14, controller 41 puts the processing on hold until sample container 110 is taken out. Once sample container 110 is taken out, controller 41 increments the value of the detection target by 1. Then, the processing advances to Step S15.

In Step S15, controller 41 determines whether or not there is sample container 110 which is finished with sample aspiration for the initial test or a retest in the measurement unit, and can be returned to sample rack 120. When there is returnable sample container 110, in Step S16, controller 41 positions holder 121 which held sample container 110 to be returned before the take-out thereof at the take-out position in the measurement unit that returns sample container 110. Then, controller 41 controls the measurement unit to return sample container 110 to holder 121 located at the take-out position. In Step S17, controller 41 puts the processing on hold until sample container 110 is returned. Once sample container 110 is returned, the processing advances to Step S18 in Fig. 11. On the other hand, when it is determined in Step S15 that there is no returnable sample container 110, the processing advances to Step S18 in Fig. 11.

As illustrated in Fig. 11, in Step S18, controller 41 determines whether or not sample rack 120 to be processed includes sample container 110 determined to require a retest and yet to be subjected to the retest. As described above, controller 41 determines the necessity of a retest based on the measurement result of the initial test. Therefore, the timing of acquiring the necessity of a retest on each sample container 110 varies depending on the measurement timing of the initial test.

When there is a sample that requires a retest, controller 41 positions sample container 110 as a retest target at reading position 334a to read the sample ID from sample information part 113 in Step S19. Then, in Step S20, controller 41 positions sample container 110 as the retest target at a take-out position in either one of first measurement unit 10 and second measurement unit 20, which can perform a retest. Since second measurement unit 20 performs the retest in Embodiment 1, sample container 110 is positioned at take-out position 335b. Thereafter, controller 41 takes sample container 110 located at the take-out position into the measurement unit that performs the retest. In Step S21, controller 41 puts the processing on hold until sample container 110 is taken out. Once sample container 110 is taken out, the processing advances to Step S22. On the other hand, when it is determined in Step S18 that there is no sample that requires a retest, the processing advances to Step S22.

In Step S22, controller 41 determines whether or not initial tests and required retests are completed for all sample containers 110 on sample rack 120. The processing returns to Step S12 in Fig. 10 when not all initial tests are completed, when the necessity of a retest is not determined for all the sample containers, and when a retest is not completed for the sample determined to require the retest. Upon completion of the processing for all sample containers 110, controller 41 transports sample rack 120 to the left end of linear transfer part 330 and uses rack feeder 337 to send sample rack 120 into second storage part 341 in Step S23. Thus, the processing of one sample rack 120 in linear transfer part 330 is completed.

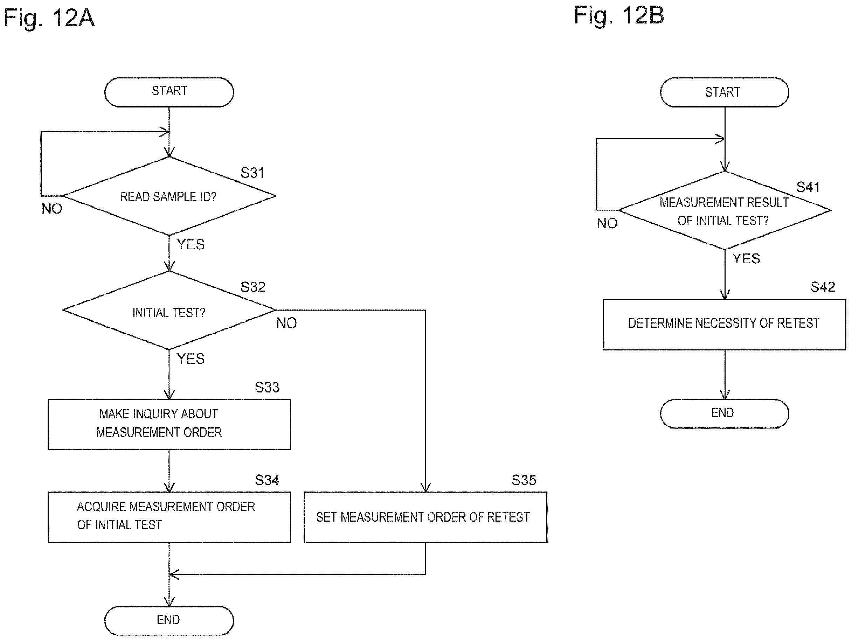

With reference to Figs. 12A and 12B, description is given of processing of setting a measurement order and processing of determining the necessity of a retest.

As illustrated in Fig. 12A, controller 41 uses information reader 334d in information reading unit 334 to read the sample ID in Step S31, and then moves to Step S32. In Step S32, controller 41 determines whether to perform an initial test on the sample having the read sample ID. In the case of performing the initial test, controller 41 makes an inquiry in Step S33 to host computer 130 about a measurement order of the initial test based on the read sample ID. In Step S34, controller 41 acquires a measurement order of the sample from host computer 130. The measurement order of the initial test in Embodiment 1 includes both of the CBC item and the DIFF item. Controller 41 performs the initial test on the sample based on the measurement order of the initial test. Upon completion of the processing in Step S34, the processing is performed again from Step S31.

When information reader 334d disposed around the center of linear transfer part 330 reads the sample ID as described above, controller 41 can acquire the measurement order before aspiration of the sample in sample container 110 is completed in the measurement unit. Thus, the measurement of the sample can be smoothly performed. Moreover, information reader 334d in each set 101 does not read the sample ID until sample container 110 is loaded on loader unit 71 through sample rack 120. Since the sample ID is read for each set 101 as described above, sample rack 120 can be quickly transported from loader unit 71 compared with a case where the information reader provided in loader unit 71 reads all the sample IDs. Thus, processing efficiency of sample analysis system 100 can be improved.

On the other hand, in the case of performing a retest, controller 41 sets a measurement order of the retest for the sample having the read sample ID in Step S35. The measurement order of the retest in Embodiment 1 includes the RET item. Controller 41 performs the retest of the sample based on the measurement order of the retest. Upon completion of the processing in Step S35, the processing is performed again from Step S31. Since controller 41 sets the measurement order of the retest in Embodiment 1, controller 41 can quickly set the measurement order of the retest compared with making an inquiry to host computer 130 about the measurement order of the retest.

As illustrated in Fig. 12B, controller 41 acquires the measurement result of the initial test on the sample in Step S41 upon completion of the measurement for the initial test by measurement part 14, and then moves to Step S42. In Step S42, controller 41 determines the necessity of a retest based on the measurement result. Upon completion of the processing in Step S42, the processing is performed again from Step S41. Since controller 41 determines the necessity of a retest in Embodiment 1, controller 41 can quickly determine the necessity of a retest compared with making an inquiry to host computer 130 about the necessity of a retest.

With reference to Figs. 13A to 13C, description is given of processing of transporting sample rack 120 downstream along first transport path 31 in transport unit 30. In the following description, it is assumed for convenience that sample analysis system 100 includes three sets 101, that is, three transport units 30 are arranged in series, as illustrated in Figs. 13B and 13C. The processing is performed in the same manner as below also when sample analysis system 100 includes one or three or more sets 101.

Fig. 13A is a flowchart illustrating processing of transporting downstream sample rack 120 that has arrived at the first entrance of first transport path 31 and sample rack 120 that has arrived at the second entrance of first transport path 31. As described above, the first entrance of first transport path 31 is position 315 on belt 314, and the second entrance of first transport path 31 is position 345 in second storage part 341. Note that the first entrance of first transport path 31 may be position 414 in loader unit 71.

First, description is given of processing when sample rack 120 with its transport destination set to set 101 including leftmost transport unit 30 has arrived at position 315 in rightmost transport unit 30 as illustrated in Fig. 13B.

With reference to Fig. 13A, in Step S51, controller 81 in transport controller 80 determines whether or not sample rack 120 to be transported downstream has arrived at position 315. To be more specific, controller 81 determines whether or not sample rack 120 has arrived at position 315, based on a detection signal from sensors 316. Then, when sample rack 120 has arrived at position 315, controller 81 determines whether or not the transport destination of sample rack 120 is on the downstream side of next set 101 on the downstream side.

When sample rack 120 to be transported downstream arrives at position 315, controller 81 determines in Step S52 whether or not first transport path 31 in transport unit 30 in the middle, which is the next transport unit on the downstream side, is in use. To be more specific, controller 81 determines whether or not there is sample rack 120 on first transport path 31 in transport unit 30 in the middle by referring to map information indicating a transport position of sample rack 120. When first transport path 31 in next transport unit 30 on the downstream side is in use, controller 81 suspends the transport of sample rack 120 at position 315 to the downstream side.

When first transport path 31 in next transport unit 30 on the downstream side is not in use, controller 81 takes sample rack 120 at position 315 onto first transport path 31 in transport unit 30 in the middle and transports sample rack 120 downstream as illustrated in Fig. 13B in Step S53. When sample rack 120 transported along first transport path 31 in transport unit 30 in the middle can be discharged to leftmost transport unit 30 that is further on the downstream side, sample rack 120 is discharged to first transport path 31 in leftmost transport unit 30 from first transport path 31 in transport unit 30 in the middle.

Next, description is given of processing when sample rack 120 with its transport destination set to set 101 including leftmost transport unit 30 has arrived at position 345 in transport unit 30 in the middle as illustrated in Fig. 13C.

With reference to Fig. 13A, in Step S51, controller 81 determines whether or not sample rack 120 to be transported downstream has arrived at position 345. To be more specific, controller 81 determines whether or not sample rack 120 has arrived at position 345, based on a detection signal from sensors 344. Then, when sample rack 120 has arrived at position 345, controller 81 determines whether or not the transport destination of sample rack 120 is on the downstream side.

When sample rack 120 to be transported downstream arrives at position 345, controller 81 determines in Step S52 whether or not first transport path 31 in transport unit 30 in the middle is in use. When first transport path 31 in the middle is in use, controller 81 suspends the transport of sample rack 120 at position 345 to the downstream side.

When first transport path 31 in the middle is not in use, controller 81 sends sample rack 120 at position 345 onto first transport path 31 as illustrated in Fig. 13C in Step S53. When sample rack 120 sent onto first transport path 31 can be discharged to leftmost transport unit 30 that is further on the downstream side, sample rack 120 is discharged to first transport path 31 in leftmost transport unit 30 from first transport path 31.

As described above, controller 81 takes sample rack 120 first positioned at a predetermined position, among sample racks 120 to be transported downstream along first transport path 31 in transport unit 30 in the middle, onto first transport path 31 in transport unit 30 in the middle and transports sample rack 120 downstream. To be more specific, when sample rack 120 has arrived at position 315 in rightmost transport unit 30 before sample rack 120 arrives at position 345 in transport unit 30 in the middle as illustrated in Fig. 13B, sample rack 120 at position 315 is first transported downstream. On the other hand, when sample rack 120 has arrived at position 345 in transport unit 30 in the middle before sample rack 120 arrives at position 315 in rightmost transport unit 30 as illustrated in Fig. 13C, sample rack 120 at position 345 is first transported downstream.

With reference to Figs. 14A to 14C, description is given of processing of transporting sample rack 120 upstream along third transport path 33 in transport unit 30. In the following description, it is assumed for convenience that sample analysis system 100 includes two sets 101 as illustrated in Fig. 1, that is, two transport units 30 are arranged in series as illustrated in Figs. 14B and 14C.

Fig. 14A is a flowchart illustrating processing of transporting upstream sample rack 120 that has arrived at the entrance of third transport path 33 and sample rack 120 that has arrived at the second entrance of first transport path 31. As described above, the entrance of third transport path 33 is position 355 on belt 351.

First, description is given of processing when sample rack 120 to be transported upstream has arrived at position 355 in transport unit 30 on the left side as illustrated in Fig. 14B.

With reference to Fig. 14A, in Step S61, controller 81 determines whether or not sample rack 120 to be transported upstream has arrived at position 355. To be more specific, controller 81 determines whether or not sample rack 120 has arrived at position 355, based on a detection signal from sensors 354.

When sample rack 120 arrives at position 355, controller 81 determines in Step S62 whether or not position 315 and third transport path 33 in next transport unit 30 on the upstream side are in use. To be more specific, controller 81 determines whether or not there is sample rack 120 at position 315 and on third transport path 33 in transport unit 30 located to the right of this transport unit 30 by referring to map information indicating a transport position of sample rack 120. When position 315 and third transport path 33 in next transport unit 30 on the upstream side are in use, controller 81 suspends the transport of sample rack 120 at position 355 to the upstream side.

When position 315 and third transport path 33 in next transport unit 30 on the upstream side are not in use, controller 81 takes sample rack 120 at position 355 onto third transport path 33 in transport unit 30 on the right side and transports sample rack 120 upstream as illustrated in Fig. 14B in Step S63. When sample rack 120 transported along third transport path 33 in transport unit 30 on the right side can be discharged to loader unit 71 and collection unit 72 further on the upstream side, sample rack 120 is discharged to the right from third transport path 33 in transport unit 30 on the right side.

Next, description is given of processing when sample rack 120 to be transported upstream has arrived at position 345 in transport unit 30 on the right side as illustrated in Fig. 14C.

With reference to Fig. 14A, in Step S61, controller 81 determines whether or not sample rack 120 to be transported upstream has arrived at position 345. To be more specific, controller 81 determines whether or not sample rack 120 has arrived at position 345, based on a detection signal from sensors 344. Then, when sample rack 120 has arrived at position 345, controller 81 determines whether or not the transport destination of sample rack 120 is on the upstream side.

When sample rack 120 to be transported upstream arrives at position 345, controller 81 determines in Step S62 whether or not position 315 and third transport path 33 are in use. When position 315 and third transport path 33 are in use, controller 81 suspends the transport of sample rack 120 at position 345 to the upstream side. On the other hand, when position 315 and third transport path 33 are not in use, controller 81 sends sample rack 120 at position 345 onto third transport path 33 through position 315 and transports sample rack 120 to the right along third transport path 33 as illustrated in Fig. 14C in Step S63.

As described above, controller 81 takes sample rack 120 first positioned at a predetermined position, among sample racks 120 to be transported upstream along third transport path 33 in transport unit 30 on the right side, onto third transport path 33 in transport unit 30 on the right side and transports sample rack 120 upstream. To be more specific, when sample rack 120 has arrived at position 355 in transport unit 30 on the left side before sample rack 120 arrives at position 345 in transport unit 30 on the right side as illustrated in Fig. 14B, sample rack 120 at position 355 is first transported upstream. On the other hand, when sample rack 120 has arrived at position 345 in transport unit 30 on the right side before sample rack 120 arrives at position 355 in transport unit 30 on the left side as illustrated in Fig. 14C, sample rack 120 at position 345 is first transported upstream.

Note that, in Figs. 14B and 14C, when transport unit 30 on the left side is a storage unit that can store sample racks 120, sample rack 120 at position 345 in transport unit 30 is first transported upstream even if sample rack 120 first arrives at a position in the storage unit corresponding to position 355. Accordingly, sample rack 120 on second transport path 32 is quickly discharged through second storage part 341. Thus, sample rack 120 to be subjected to measurement by first measurement unit 10 and second measurement unit 20 can be quickly conveyed onto second transport path 32.

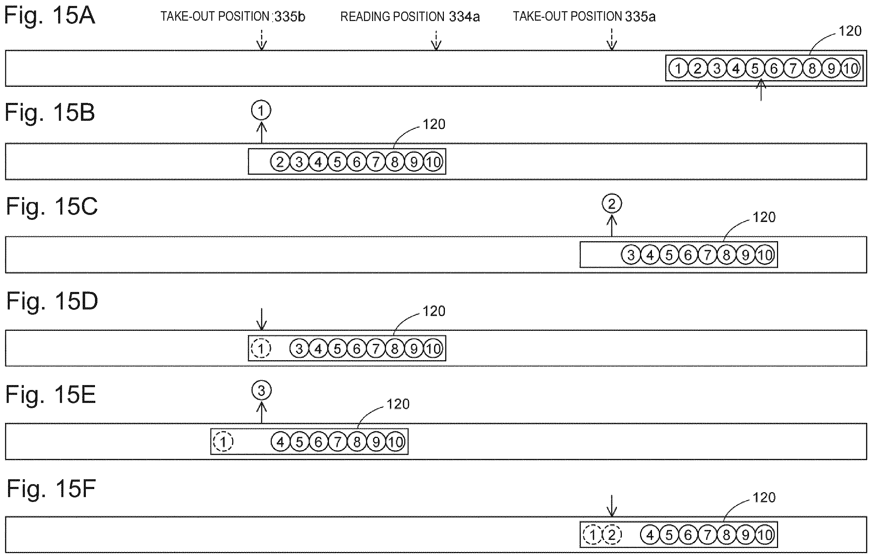

Next, with reference to Figs. 15A to 15F, 16A to 16F, and 17A to 17F, description is given of transfer of sample rack 120 in linear transfer part 330. On sample racks 120 in Figs. 15A to 17F, solid-line circles each represent sample container 110 yet to be subjected to an initial test, broken-line circles each represent sample container 110 in a state where the measurement result of the initial test is yet to be acquired, dotted-line circles each represent sample container 110 determined to require no retest based on the initial test, and double-lined circles each represent sample container 110 determined to require a retest based on the initial test.

As illustrated in Fig. 15A, the preceding rack is sent into linear transfer part 330. As illustrated in Fig. 15B, sample container 110 in holding position 1 is taken into second measurement unit 20 at take-out position 335b. As illustrated in Fig. 15C, sample container 110 in holding position 2 is taken into first measurement unit 10 at take-out position 335a.

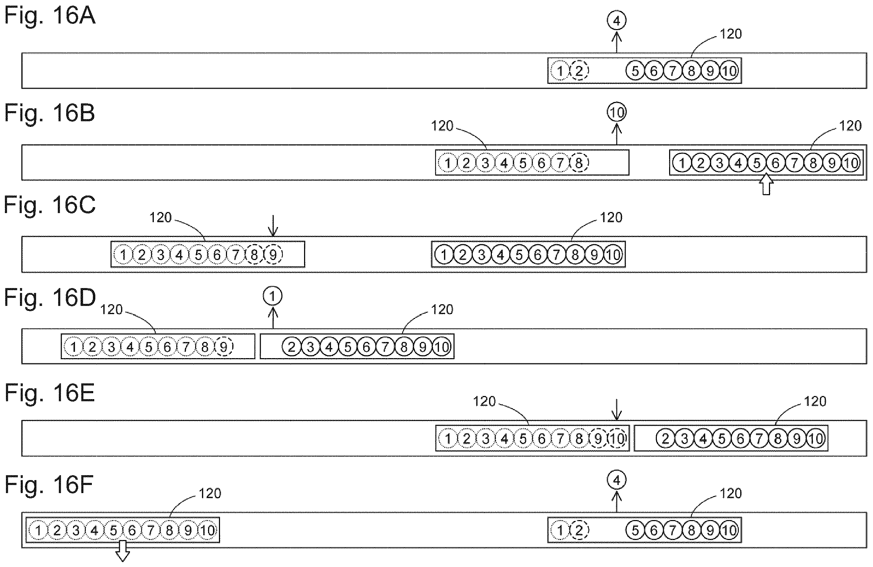

Upon completion of aspiration for an initial test on sample container 110 in holding position 1, sample container 110 is returned to holding position 1 as illustrated in Fig. 15D. As illustrated in Fig. 15E, sample container 110 in holding position 3 is taken into second measurement unit 20 at take-out position 335b. Upon completion of aspiration for an initial test on sample container 110 in holding position 2, sample container 110 is returned to holding position 2 as illustrated in Fig. 15F. As illustrated in Fig. 16A, sample container 110 in holding position 4 is taken into first measurement unit 10 at take-out position 335a. In this example, immediately after sample container 110 in holding position 4 is taken, the sample in holding position 1 is determined to require no retest. In this way, sample containers 110 on the preceding rack are sequentially taken into first measurement unit 10 or second measurement unit 20 and then returned.

As illustrated in Fig. 16B, when sample container 110 in holding position 10 on the preceding rack is taken into first measurement unit 10, the following rack is sent into linear transfer part 330. Upon completion of aspiration for an initial test on sample container 110 in holding position 9 on the preceding rack, sample container 110 is returned to holding position 9 on the preceding rack as illustrated in Fig. 16C.

As illustrated in Fig. 16D, sample container 110 in holding position 1 on the following rack is taken into second measurement unit 20 at take-out position 335b. In this event, the preceding rack is retreated to the left as illustrated in Fig. 16D. In this example, immediately after sample container 110 in holding position 1 on the following rack is taken, the sample in holding position 8 on the preceding rack is determined to require no retest. Upon completion of aspiration for an initial test on sample container 110 in holding position 10 on the preceding rack, sample container 110 is returned to holding position 10 on the preceding rack as illustrated in Fig. 16E. In this event, the following rack is retreated to the right as illustrated in Fig. 16E.

In this event, as illustrated in Fig. 16E, determination of the necessity of a retest is yet to be performed since the measurement results of the initial tests are not acquired for sample containers in holding positions 9 and 10 on the preceding rack. In this case, transport unit 30 puts sample rack 120 on standby at a standby position on second transport path 32, for example, at the leftmost position on second transport path 32 until measurement results on all the samples are determined as to whether to conduct a retest. Then, when it is determined that retests are required, transport unit 30 transports sample rack 120 to second measurement unit 20 by transporting sample rack 120 to the right from the standby position.

Thus, the initial tests are performed on all sample containers 110 on the preceding rack. Then, when it is determined that no retests are required, the preceding rack is discharged from linear transfer part 330 as illustrated in Fig. 16F.

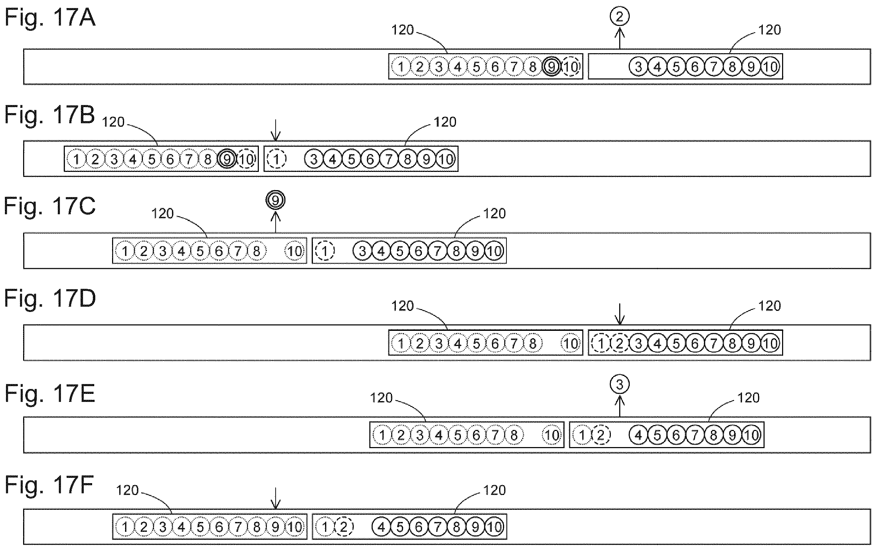

With reference to Figs. 17A to 17F, description is given of a case where there is a sample determined to require a retest.

As illustrated in Fig. 17A, in this example, when sample container 110 in holding position 2 on the following rack is taken into first measurement unit 10 at take-out position 335a, the sample in holding position 9 on the preceding rack is determined to require a retest. Upon completion of aspiration for an initial test on sample container 110 in holding position 1 on the following rack, sample container 110 is returned to holding position 1 on the following rack as illustrated in Fig. 17B. As illustrated in Fig. 17C, sample container 110 in holding position 9 on the preceding rack, which is determined to require a retest, is taken into second measurement unit 20 at take-out position 335b.

Upon completion of aspiration for an initial test on sample container 110 in holding position 2 on the following rack, sample container 110 is returned to holding position 2 on the following rack as illustrated in Fig. 17D. As illustrated in Fig. 17E, sample container 110 in holding position 3 on the following rack is taken into first measurement unit 10 at take-out position 335a. Upon completion of aspiration for a retest on sample container 110 in holding position 9 on the preceding rack, sample container 110 is returned to holding position 9 on the preceding rack as illustrated in Fig. 17F. Thereafter, the preceding rack is discharged from linear transfer part 330.

As described above with reference to Figs. 15A to 17F, sample racks 120 are transported back and forth between first measurement unit 10 and second measurement unit 20 in linear transfer part 330, thereby supplying the samples to first measurement unit 10 and second measurement unit 20. Thus, the measurement of the samples can be quickly performed while reducing standby time for measurement in first and second measurement units 10 and 20. As a result, processing capability of sample analysis system 100 can be enhanced.

In Embodiment 1, first measurement unit performs only initial tests, and second measurement unit 20 performs both initial tests and retests. Alternatively, first and second measurement units 10 and 20 may both perform only initial tests. In this case, sample analysis system 100 includes, for example, a second set capable of performing retests on the downstream side of a first set located on the upstream side and dedicated for initial tests.

In this case, when the first set performs initial tests on all the samples, sample rack 120 is sent to second storage part 341 in the first set. In this event, transport unit 30 on the upstream side puts sample rack 120 on standby in second storage part 341 until measurement results of the initial tests on all the samples held on sample rack 120 are determined as to whether to conduct a retest. Then, when the samples on sample rack 120 are determined to require retests, transport unit 30 on the upstream side discharges sample rack 120 to first transport path 31 in the second set. Thereafter, transport unit 30 on the downstream side transports sample rack 120 to the measurement unit capable of performing retests in the second set.

Sample analysis system 100 may further include a sample rearrangement unit between set 101 and set 101 for performing only retests. The sample rearrangement unit rearranges only sample containers 110 determined to require retests, and sets sample containers 110 on sample rack 120.

The number of sets 101 included in sample analysis system 100 is not limited to two but may be one or three or more. When sample analysis system 100 includes one or three or more sets 101, again, sample rack 120 is transported along first transport path 31 in the case of transporting sample rack 120 while skipping set 101 from the upstream side of set 101 to the downstream side of set 101. Thus, sample rack 120 can be quickly transported to the downstream side.

### <Embodiment 2>

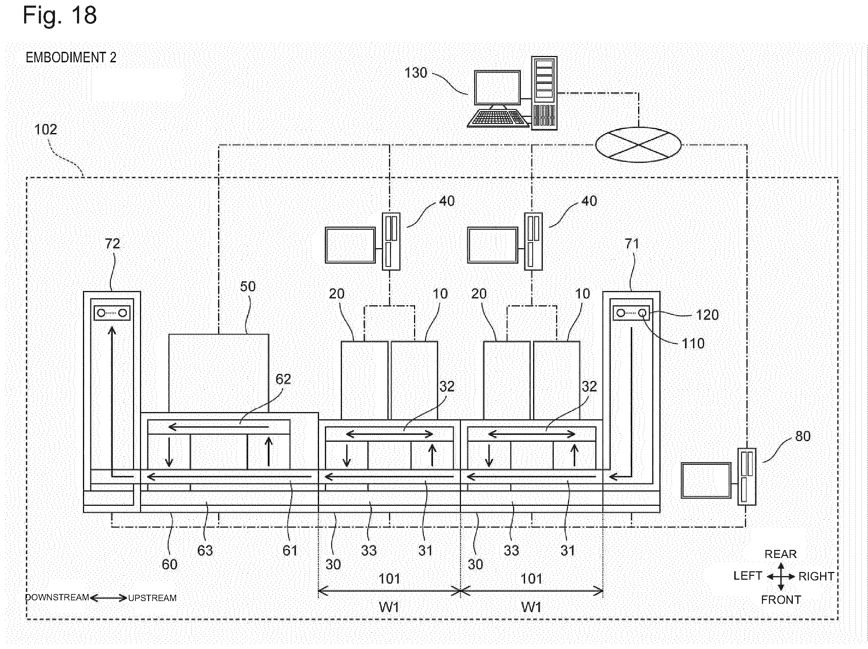

In sample analysis system 102 according to Embodiment 2, as illustrated in Fig. 18, collection unit 72 is disposed on the downstream side of a most downstream transport unit, compared with sample analysis system 100 according to Embodiment 1. To be more specific, collection unit 72 is disposed adjacent to the downstream side of transport unit 60. In Embodiment 2, sample rack 120 is not transported upstream, and collection unit 72 collects sample rack 120 finished with measurement and transported to the downstream side.

Note that transport units 30 and 60 according to Embodiment 2 also include third transport paths 33 and 63, respectively, as in the case of Embodiment 1. Even when sample rack 120 is not transported upstream as described above, third transport paths 33 and 63 provided as in the case of Embodiment 1 enable free setting of a layout of the respective units. More specifically, in configuring the sample analysis system, the layout of the units can be easily set to either one of a layout in which collection unit 72 is disposed on the upstream side as illustrated in Fig. 1 and a layout in which collection unit 72 is disposed on the downstream side as illustrated in Fig. 18.

Here, description is given of Comparative Example 2 for Embodiment 2.

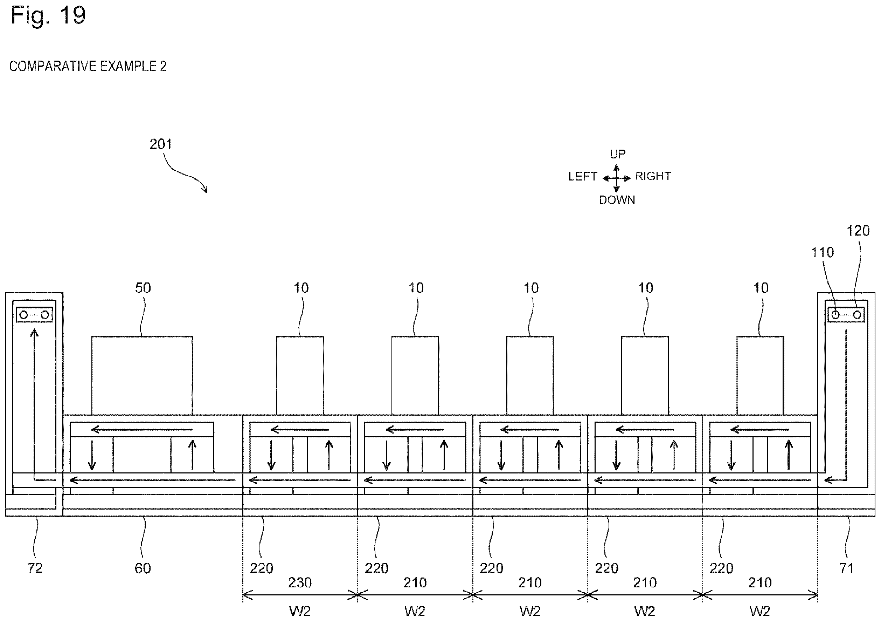

In sample analysis system 201 according to Comparative Example 2, as illustrated in Fig. 19, set 230 is added between four sets 210 and transport unit 60 and collection unit 72 is disposed on the most downstream side, compared with sample analysis system 200 according to Comparative Example 1 illustrated in Fig. 3. First measurement units 10 in four sets 210 perform only initial tests. First measurement unit 10 in set 230 performs only retests.

In sample analysis system 201 according to Comparative Example 2, the installation area is significantly larger than in sample analysis system 102 according to Embodiment 2 illustrated in Fig. 18. Moreover, sample analysis system 201 according to Comparative Example 2 includes an extra measurement unit compared with Embodiment 2, and thus consumes more reagents and the like for use in cleaning of passages in the measurement units. Furthermore, a study conducted by the inventors revealed that the same processing capability as that in Comparative Example 2 can be achieved in Embodiment 2. Therefore, the configuration of the sample analysis system according to Embodiment 2 is more desirable than that of Comparative Example 2, in terms of reducing the installation area, saving the consumption of reagents, maintaining the processing capability, and the like.

### <Embodiment 3>

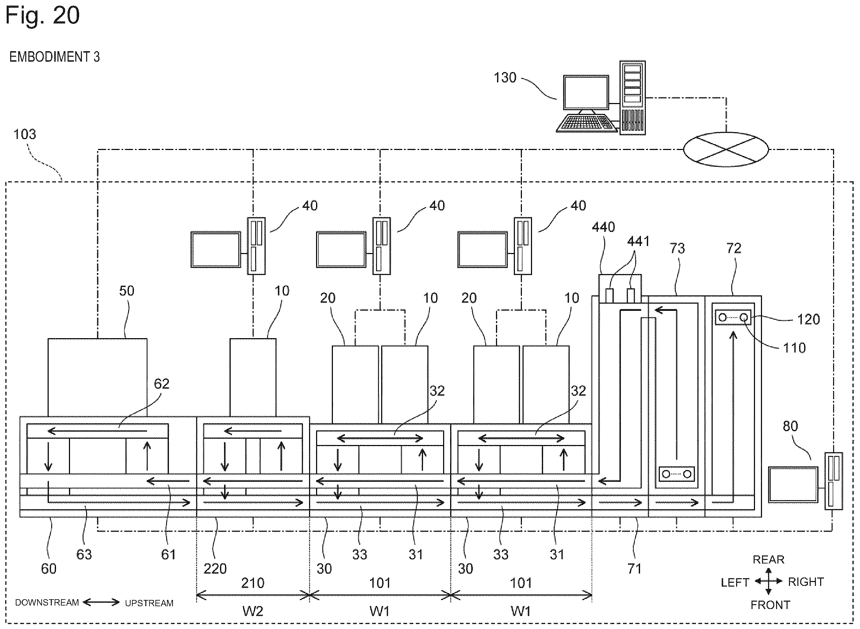

In sample analysis system 103 according to Embodiment 3, as illustrated in Fig. 20, set 210 is added between two sets 101 and transport unit 60, storage unit 73 is installed to the right of loader unit 71, and information reading mechanism 440 is installed in loader unit 71, compared with sample analysis system 100 according to Embodiment 1.

Set 210 is the same as set 210 according to Comparative Example 1. First measurement unit 10 in set 210 according to Embodiment 3 can measure PLT-F (low platelet count). A reagent or the like to enable measurement of PLT-F is connected to first measurement unit 10 in set 210. Storage unit 73 is a unit for receiving and storing sample racks 120 to be processed by sample analysis system 103. Information reading mechanism 440 includes two information reading units 441 having the same configuration as that of information reading unit 334 illustrated in Fig. 4. Two information reading units 441 are configured to be movable in the left-right direction within information reading mechanism 440.

When an operator places sample rack 120 holding sample containers 110 on a transport path in storage unit 73, sample rack 120 is transported backward and discharged to loader unit 71. Sample rack 120 conveyed into loader unit 71 is positioned at a position in the back of loader unit 71. At this position, information reading unit 441 on the left side reads a rack ID of sample rack 120. Furthermore, the presence of sample containers 110 in all holders 121 on sample rack 120 is detected and sample IDs of all sample containers 110 are read by two information reading units 441 moving from side to side.

Then, sample rack 120 finished with reading by information reading mechanism 440 is transported forward and positioned at position 414 illustrated in Fig. 6 where information reader 417 reads the rack ID of sample rack 120. In this event, controller 81 in transport controller 80 makes an inquiry to host computer 130 about a measurement order based on the sample ID of sample container 110 held on sample rack 120, and determines a transport destination of sample rack 120 based on the acquired measurement order. More specifically, in Embodiment 3, the transport destination of sample rack 120 is determined in consideration of not only the load balancing between two sets 101 as in Embodiment 1 but also the measurement order for each sample.

For example, there is a case where a measurement order including only PLT-F measurement in first measurement unit 10 in set 210 is set for all sample containers 110 held on sample rack 120. In such a case, controller 81 in transport controller 80 sets the transport destination of sample rack 120 to set 210 when sending sample rack 120 out of loader unit 71. Thus, sample rack 120 wished to be transported to only set 210 can be efficiently transported to set 210 while omitting the measurement in set 101.

Note that there is also a case where a measurement order including only processing in processing unit 50 is set for all sample containers 110 held on sample rack 120. In such a case, again, sample rack 120 wished to be transported to only processing unit 50 can be efficiently transported to processing unit 50 while omitting the measurement in sets 101 and 210.

Here, when the detection of the presence of sample containers 110, reading of the sample IDs, and reading of the rack IDs are performed in loader unit 71 as in Embodiment 3, sample rack 120 can be efficiently transported according to the transport destination based on the measurement order as described above. However, when the reading by information reading mechanism 440 is performed in loader unit 71, the timing of discharging sample rack 120 from loader unit 71 is delayed compared with a case without information reading mechanism 440. In this case, even if the reading by the information reading unit is omitted on the second transport paths in transport units 30, 60, and 220, for example, processing efficiency of sample analysis system 103 is reduced.

Therefore, it is desirable that the detection of the presence of sample containers 110, reading of the sample IDs, and reading of the rack IDs are performed in the respective transport units, rather than loader unit 71, as in Embodiment 1, when detailed setting of the transport destination of sample rack 120 is not required. When the detection and reading described above are performed in the respective transport units, rather than loader unit 71, the detection and reading are performed concurrently in the respective transport units. Thus, the processing efficiency of the sample analysis system can be improved.

### <Embodiment 4>

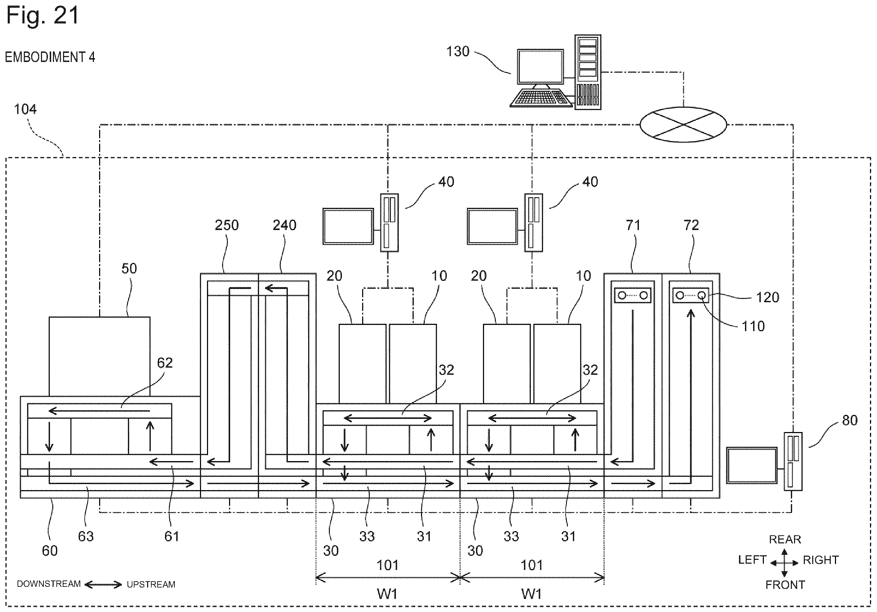

In sample analysis system 104 according to Embodiment 4, as illustrated in Fig. 21, storage units 240 and 250 are added between two sets 101 and transport unit 60, compared with sample analysis system 100 according to Embodiment 1.

In Embodiment 4, sample rack 120 with its transport destination set to processing unit 50 passes through storage units 240 and 250 after being discharged from transport unit 30 on the left side. Storage units 240 and 250 each include a table-shaped plate member elongated in the front-back direction. Therefore, even when sample racks 120 with the transport destination set to processing unit 50 are generated approximately at the same timing and discharged from transport unit 30 on the left side, transport unit 60 can be prevented from being filled up with sample racks 120 by storing sample racks 120 on the plate members in storage units 240 and 250. Thus, aspiration using piercer 52a in processing unit 50 can be smoothly performed.

Note that, in Embodiment 4, set 210 according to Embodiment 3 illustrated in Fig. 20 may be installed between storage unit 250 and transport unit 60. In this case, even when sample racks 120 with the transport destination set to set 210 or processing unit 50 are generated approximately at the same timing, taking in of sample containers 110 in set 210 and aspiration using piercer 52a in processing unit 50 can be smoothly performed.

### <Embodiment 5>

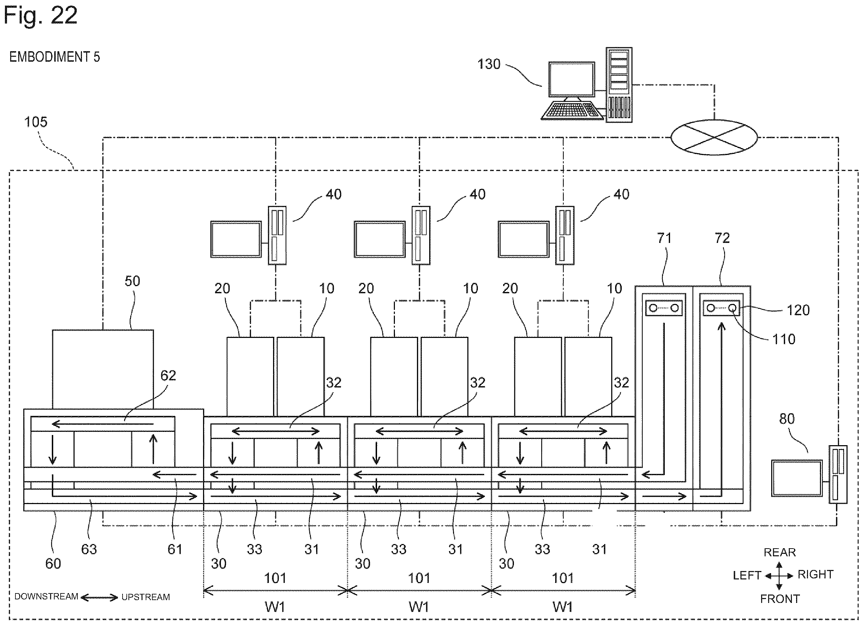

In sample analysis system 105 according to Embodiment 5, as illustrated in Fig. 22, one more set 101 is further added and thus three sets 101 are arranged, compared with sample analysis system 100 according to Embodiment 1. In this case, processing capability of the sample analysis system is enhanced compared with Embodiment 1.

Here, set 101 adjacent to loader unit 71 is called the "first set", set 101 adjacent to the left of the first set is called the "second set", and set 101 adjacent to the left of the second set is called the "third set". Hereinafter, description is given of transport of sample rack 120 in the first to third sets.

When transporting sample rack 120 loaded on loader unit 71 to the measurement block in the second set, controller 81 in transport controller 80 starts transport operations of first transport path 31 in transport unit 30 in the first set and first transport path 31 in transport unit 30 in the second set, and also moves rack feeder 313 in transport unit 30 in the second set to the stop position. When sample rack 120 is stopped on first transport path 31 by rack feeder 313 in transport unit 30 in the second set, controller 81 moves rack feeder 313 backward and supplies sample rack 120 stopped by rack feeder 313 to first storage part 321 in transport unit 30 in the second set.

When transporting sample rack 120 loaded on loader unit 71 to the measurement block in the third set, controller 81 in transport controller 80 starts transport operations of first transport path 31 in transport unit 30 in the first set and first transport path 31 in transport unit 30 in the second set, thereby transporting sample rack 120 to first transport path 31 in the first set. When sample rack 120 is transported to first transport path 31 in the first set, controller 81 starts a transport operation of first transport path 31 in transport unit 30 in the third set, and also moves rack feeder 313 in transport unit 30 in the third set to the stop position. Thereafter, sample rack 120 is supplied to first storage part 321 in transport unit 30 in the third set by rack feeder 313 in the third set.

## Claims

1. A sample analysis system (100) comprising:
at least two sets (101) each of which includes a measurement block including a first measurement unit (10) and a second measurement unit (20) configured to test a sample contained in a sample container (110), and each of which includes a transport unit (30) for transporting a sample rack (120), the transport unit (30) being disposed corresponding to the measurement block,
wherein the transport units (30) of the at least two sets (101) are disposed adjacent to each other so as to enable handing over of the sample rack (120) from an upstream side to a downstream side in the sample analysis system (100),
wherein the at least two sets (101) include at least a first set and a second set provided downstream of the first set, each of which includes the measurement block and the transport unit (30),
wherein the transport unit (30) includes a first transport path (31) along which the sample rack (120) holding sample containers (110) containing samples is transported from an upstream side to a downstream side and a second transport path (32) along which the sample rack (120) received from the first transport path (31) is transported to the first and second measurement units (10, 20) in the measurement block, and
the second transport path (32) is configured to move the sample rack (120) back and forth between the first and second measurement units (10, 20) to distribute the sample containers (110) held on the sample rack to the first and second measurement units (10, 20);
the sample analysis system (100) further comprising
a loader unit (71) which is disposed on the upstream side of the most upstream transport unit (30), and on which the sample rack (120) holding sample containers (110) containing samples yet to be measured can be loaded.

2. The sample analysis system (100) according to claim 1, wherein
the second transport path (32) is configured to move the sample rack (120) from the first measurement unit (10) to the second measurement unit (20) in a first direction and from the second measurement unit (20) to the first measurement unit (10) in a second direction opposite to the first direction such that the second transport path (32) moves the sample rack (120) back and forth between the first measurement unit (10) and the second measurement unit (20) to distribute the sample containers (110) held on the sample rack (120) to the first measurement unit (10) and the second measurement unit.

3. The sample analysis system (100) according to claim 2, wherein
the transport unit (30) includes a transporting device configured to transport the sample rack (120) in the first and second directions in the second transport path (32), and
the transporting device is configured to transport the sample rack (120) between the first measurement unit (10) and the second measurement unit (20).

4. The sample analysis system (100) according to claim 3, wherein
the transport unit (30) is configured to put the sample rack (120) on standby at a standby position on the second transport path (32) until measurement results on all the samples contained in the sample containers (110) held on the sample rack (120) are determined as to whether to conduct a retest.

5. The sample analysis system (100) according to claim 4, wherein
if the retest is determined to be conducted, the transport unit (30) is configured to transport the sample rack (120) to the second measurement unit (20) by transporting the sample rack (120) in the second direction from the standby position.

6. The sample analysis system (100) according to any one of claims 1 to 5, wherein
the transport unit (30) includes
a first storage part (321) that is disposed between the first transport path (31) and the second transport path (32), and at which the sample rack (120) received from the first transport path (31) can be temporarily stored before being supplied to the second transport path (32) and
a second storage part (341) that is disposed between the first transport path (31) and the second transport path (32), and at which the sample rack (120) received from the second transport path (32) can be temporarily stored before being supplied to the first transport path (31).

7. The sample analysis system (100) according to claim 6, wherein
the transport unit (30) includes a rack feeder (337) configured to feed the sample rack (120) transported along the first transport path (31) to the first storage part (321), and
the rack feeder (337) is movable between a retreat position where the rack feeder (337) does not hinder transport of the sample rack (120) along the first transport path (31) and a stop position where the rack feeder (337) stops the sample rack (120) transported along the first transport path (31), and configured to feed the sample rack (120) stopped at the stop position to the first storage part (321).

8. The sample analysis system (100) according to claim 6 or 7, wherein
the transport unit (30) is configured to put the sample rack (120) on standby in the second storage part (341) until measurement results on all the samples held on the sample rack (120) are determined as to whether to conduct a retest.

9. The sample analysis system (100) according to claim 8, wherein
if the retest is determined to be conducted in the second set, the transport unit (30) is configured to transport the sample rack (120) from the second storage part (341) in the first set through the first transport path (31) of the first set, the first transport path (31) in the second set adjacent to the first transport path (31) in the first set, and the second transport path (32) in the second set, to the second measurement unit (20) in the second set.

10. The sample analysis system (100) according to any one of claims 6 to 9, wherein
the transport unit (30) includes first and second transporters which are configured to independently transport the sample rack (120) in the first and second directions in the second transport path (32), and
before sending, to the second storage part (341), one sample rack (120) that is transported by the first transporting device in the second transport path (32) and whose all the sample containers (110) are finished to be supplied to the measurement block, the transport unit (30) supplies another following sample rack (120) from the first storage part (321) to the second transport path (32) and transports the following sample rack (120) in the first direction by the second transporting device.

11. The sample analysis system (100) according to any one of claims 1 to 10, further comprising:
a transport controller (80) programed to determine a destination of the sample rack (120) loaded on the loader unit (71); and
a control unit (40) which is included in each of the sets (101), is communicably connected to the measurement block in the corresponding set, and programed to control a measurement operation of the measurement block.

12. The sample analysis system (100) according to claim 11, wherein
the control unit (40) is programed to receive measurement data on a sample from the measurement block and generating a measurement result on the sample.

13. The sample analysis system (100) according to claim 11 or 12, wherein
the transport controller (80) is programed to control the transport units such that the transport units transport one of sample racks (120) loaded on the loader unit (71) to the measurement block in a first set among the sets (101) and transport another one of the sample racks (120) to the measurement block in a second set among the sets (101).

14. A sample analysis method for operating the sample analysis system (100) according to any of claims 1 to 13,
wherein the sample analysis method comprising:
transporting a sample rack (120) along the first transport path (31);
placing the sample rack (120) from the first transport path (31) to the second transport path (32); and
transporting along the second transport path (32) the sample rack (120) back and forth between the first and second measurement units (10, 20) to distribute sample containers (110) held on the sample rack (120) to the first and second measurement units (10, 20).

## Patentansprüche

1. Probenanalysesystem (100), umfassend:
mindestens zwei Sets (101), von denen jeder einen Messblock beinhaltet, der eine erste Messeinheit (10) und eine zweite Messeinheit (20) beinhaltet, konfiguriert, um eine Probe zu testen, die in einem Probenbehälter (110) enthalten ist, und von denen jeder eine Transporteinheit (30) zum Transportieren eines Probengestells (120) beinhaltet, wobei die Transporteinheit (30) entsprechend dem Messblock angeordnet ist,
wobei die Transporteinheiten (30) der mindestens zwei Sets (101) angrenzend aneinander angeordnet sind, um Übergeben des Probengestells (120) von einer stromaufwärtigen Seite an eine stromabwärtige Seite in dem Probenanalysesystem (100) zu ermöglichen,
wobei die mindestens zwei Sets (101) mindestens einen ersten Set und einen zweiten Set, stromabwärts des ersten Sets bereitgestellt, beinhalten, von denen jeder den Messblock und die Transporteinheit (30) beinhaltet,
wobei die Transporteinheit (30) einen ersten Transportpfad (31) beinhaltet, entlang dessen das Probengestell (120), das Probenbehälter (110) hält, die Proben enthalten, von einer stromaufwärtigen Seite zu einer stromabwärtigen Seite transportiert wird, und einen zweiten Transportpfad (32), entlang dessen das Probengestell (120), das von dem ersten Transportpfad (31) empfangen wird, zu der ersten und zweiten Messeinheit (10, 20) in dem Messblock transportiert wird, und
der zweite Transportpfad (32) konfiguriert ist, um das Probengestell (120) zwischen der ersten und zweiten Messeinheit (10, 20) vor- und zurückzubewegen, um die Probenbehälter (110), die auf dem Probengestell gehalten werden, an die erste und zweite Messeinheit (10, 20) zu verteilen;
wobei das Probenanalysesystem (100) weiter umfasst
eine Ladereinheit (71), die an der stromaufwärtigen Seite der am weitesten stromaufwärtigen Transporteinheit (30) angeordnet ist, und an der das Probengestell (120), das Probenbehälter (110) hält, die die noch zu messende Proben enthalten, geladen werden kann.

2. Probenanalysesystem (100) nach Anspruch 1, wobei
der zweite Transportpfad (32) konfiguriert ist, um das Probengestell (120) von der ersten Messeinheit (10) zu der zweiten Messeinheit (20) in einer ersten Richtung und von der zweiten Messeinheit (20) zu der ersten Messeinheit (10) in einer zweiten Richtung, entgegengesetzt der ersten Richtung zu bewegen, sodass der zweite Transportpfad (32) das Probengestell (120) zwischen der ersten Messeinheit (10) und der zweiten Messeinheit (20) vor- und zurückbewegt, um die Probenbehälter (110), die auf dem Probengestell (120) gehalten werden, an die erste Messeinheit (10) und die zweiten Messeinheit zu verteilen.

3. Probenanalysesystem (100) nach Anspruch 2, wobei
die Transporteinheit (30) eine Transportvorrichtung beinhaltet, konfiguriert, um das Probengestell (120) in der ersten und zweiten Richtung in dem zweiten Transportpfad (32) zu transportieren, und
die Transportvorrichtung konfiguriert ist, um das Probengestell (120) zwischen der ersten Messeinheit (10) und der zweiten Messeinheit (20) zu transportieren.

4. Probenanalysesystem (100) nach Anspruch 3, wobei
die Transporteinheit (30) konfiguriert ist, um das Probengestell (120) bei einer Bereitschaftsposition auf dem zweiten Transportpfad (32) bereitzuhalten, bis Messergebnisse an all den Proben, die in den auf dem Probengestell (120) gehaltenen Probenbehältern (110) enthalten sind, dahingehend ermittelt wurden, ob ein Wiederholungstest durchzuführen ist.

5. Probenanalysesystem (100) nach Anspruch 4, wobei
falls ermittelt wurde, dass der Wiederholungstest durchzuführen ist, die Transporteinheit (30) konfiguriert ist, das Probengestell (120) zu der zweiten Messeinheit (20) zu transportieren, indem das Probengestell (120) von der Bereitschaftsposition in der zweiten Richtung transportiert wird.

6. Probenanalysesystem (100) nach einem der Ansprüche 1 bis 5, wobei
die Transporteinheit (30) beinhaltet
einen ersten Lagerungsteil (321), der zwischen dem ersten Transportpfad (31) und dem zweiten Transportpfad (32) angeordnet ist, und bei dem das Probengestell (120), das von dem ersten Transportpfad (31) empfangen wurde, vorübergehend gelagert werden kann, bevor es dem zweiten Transportpfad (32) zugeführt wird, und
einen zweiten Lagerungsteil (341), der zwischen dem ersten Transportpfad (31) und dem zweiten Transportpfad (32) angeordnet ist, und bei dem das Probengestell (120), das von dem zweiten Transportpfad (32) empfangen wurde, vorübergehend gelagert werden kann, bevor es dem ersten Transportpfad (31) zugeführt wird.

7. Probenanalysesystem (100) nach Anspruch 6, wobei
die Transporteinheit (30) einen Gestellzulieferer (337) beinhaltet, konfiguriert, um das Probengestell (120), das entlang des ersten Transportpfads (31) transportiert wird, zu dem ersten Lagerungsteil (321) zu liefern, und
der Gestellzulieferer (337) zwischen einer Rückzugsposition, in der der Gestellzulieferer (337) Transport des Probengestells (120) entlang des ersten Transportpfads (31) nicht behindert, und einer Stoppposition, in der der Gestellzulieferer (337) das Probengestell (120) stoppt, das entlang des ersten Transportpfads (31) transportiert wird, bewegbar und konfiguriert ist, das Probengestell (120), das bei der Stoppposition gestoppt wurde, zu dem ersten Lagerungsteil (321) zu liefern.

8. Probenanalysesystem (100) nach Anspruch 6 oder 7, wobei
die Transporteinheit (30) konfiguriert ist, um das Probengestell (120) in dem zweiten Lagerungsteil (341) in Bereitschaft zu versetzen, bis Messergebnisse an allen der auf dem Probengestell (120) gehaltenen Proben dahingehend ermittelt wurden, ob ein Wiederholungstest durchzuführen ist.

9. Probenanalysesystem (100) nach Anspruch 8, wobei
falls ermittelt wurde, dass der Wiederholungstest im zweiten Set durchzuführen ist, die Transporteinheit (30) konfiguriert ist, um das Probengestell (120) von dem zweiten Lagerungsteil (341) in dem ersten Set durch den ersten Transportpfad (31) des ersten Sets, den ersten Transportpfad (31) in dem zweiten Set, der an den ersten Transportpfad (31) in dem ersten Set angrenzt, und den zweiten Transportpfad (32) in dem zweiten Set zu der zweiten Messeinheit (20) in dem zweiten Set zu transportieren.

10. Probenanalysesystem (100) nach einem der Ansprüche 6 bis 9, wobei
die Transporteinheit (30) erste und zweite Transporter beinhaltet, die konfiguriert sind, unabhängig das Probengestell (120) in der ersten und zweiten Richtung in dem zweiten Transportpfad (32) zu transportieren, und
vor Senden an den zweiten Lagerungsteil (341), ein Probengestell (120), das von der ersten Transportvorrichtung in dem zweiten Transportpfad (32) transportiert wird und von dem all die Probenbehälter (110) fertig sind, dem Messblock zugeführt zu werden, die Transporteinheit (30) ein weiteres folgendes Probengestell (120) von dem ersten Lagerungsteil (321) an den zweiten Transportpfad (32) zuführt und das folgende Probengestell (120) durch die zweite Transportvorrichtung in der ersten Richtung transportiert.

11. Probenanalysesystem (100) nach einem der Ansprüche 1 bis 10, weiter umfassend:
eine Transportsteuerung (80), programmiert, um ein Ziel des auf die Ladereinheit (71) geladenen Probengestells (120) zu ermitteln; und
eine Steuereinheit (40), die in jedem der Sets (101) beinhaltet ist, kommunizierend mit dem Messblock in dem entsprechenden Set verbunden und programmiert ist, einen Messbetrieb des Messblocks zu steuern.

12. Probenanalysesystem (100) nach Anspruch 11, wobei
die Steuereinheit (40) programmiert ist, Messdaten zu einer Probe von dem Messblock zu empfangen und ein Messergebnis an der Probe zu erzeugen.

13. Probenanalysesystem (100) nach Anspruch 11 oder 12, wobei
die Transportsteuerung (80) programmiert ist, um die Transporteinheiten so zu steuern, dass die Transporteinheiten eines von auf die Ladereinheit (71) geladenen Probengestellen (120) an den Messblock in einem ersten Set unter den Sets (101) zu transportieren und ein weiteres der Probengestelle (120) zu dem Messblock in einem zweiten Set unter den Sets (101) zu transportieren.

14. Probenanalyseverfahren zum Betreiben des Probenanalysesystems (100) nach einem der Ansprüche 1 bis 13,
wobei das Probenanalyseverfahren umfasst:
Transportieren eines Probengestells (120) entlang des ersten Transportpfads (31);
Platzieren des Probengestells (120) von dem ersten Transportpfad (31) zu dem zweiten Transportpfad (32); und
Transportieren, entlang des zweiten Transportpfads (32), des Probengestells (120) vor und zurück zwischen der ersten und zweiten Messeinheit (10, 20), um auf dem Probengestell (120) gehaltene Probenbehälter (110) an die erste und zweite Messeinheit (10, 20) zu verteilen.

## Revendications

1. Système d'analyse d'échantillon (100) comprenant :
au moins deux ensembles (101), chacun d'eux incluant un bloc de mesure incluant une première unité de mesure (10) et une seconde unité de mesure (20) configuré pour tester un échantillon contenu dans un récipient d'échantillon (110), et chacun d'eux incluant une unité de transport (30) pour transporter un plateau porte-échantillons (120), l'unité de transport (30) étant disposée en correspondance avec le bloc de mesure,
dans lequel les unités de transport (30) des au moins deux ensembles (101) sont disposées adjacentes l'une à l'autre de manière à permettre le transfert du plateau porte-échantillons (120) d'un côté amont à un côté aval dans le système d'analyse d'échantillon (100),
dans lequel les au moins deux ensembles (101) incluent au moins un premier ensemble et un second ensemble prévu en aval du premier ensemble, chacun d'eux incluant le bloc de mesure et l'unité de transport (30),
dans lequel l'unité de transport (30) inclut une première voie de transport (31) le long de laquelle le plateau porte-échantillons (120) portant des récipients d'échantillons (110) contenant des échantillons est transporté depuis un côté amont à un côté aval et une seconde voie de transport (32) le long de laquelle le plateau porte-échantillons (120) reçu depuis la première voie de transport (31) est transporté jusqu'aux première et seconde unités de mesure (10, 20) dans le bloc de mesure, et
la seconde voie de transport (32) est configurée pour déplacer le plateau porte-échantillons (120) en va-et-vient entre les première et seconde unités de mesure (10, 20) pour distribuer les récipients d'échantillons (110) portés sur le plateau porte-échantillons aux première et seconde unités de mesure (10, 20) ;
le système d'analyse d'échantillon (100) comprenant en outre
une unité chargeuse (71) qui est disposée sur le côté amont de l'unité de transport (30) la plus en amont, et sur laquelle le plateau porte-échantillons (120) portant des récipients d'échantillons (110) contenant des échantillons restant à mesurer peut être chargé.

2. Système d'analyse d'échantillon (100) selon la revendication 1, dans lequel
la seconde voie de transport (32) est configurée pour déplacer le plateau porte-échantillons (120) de la première unité de mesure (10) à la seconde unité de mesure (20) dans une première direction et de la seconde unité de mesure (20) à la première unité de mesure (10) dans une seconde direction à l'opposé de la première direction de sorte que la seconde voie de transport (32) déplace le plateau porte-échantillons (120) en va-et-vient entre la première unité de mesure (10) et la seconde unité de mesure (20) pour distribuer les récipients d'échantillons (110) portés sur le plateau porte-échantillons (120) à la première unité de mesure (10) et à la seconde unité de mesure.

3. Système d'analyse d'échantillon (100) selon la revendication 2, dans lequel
l'unité de transport (30) inclut un dispositif de transport configuré pour transporter le plateau porte-échantillons (120) dans les première et seconde directions dans la seconde voie de transport (32), et
le dispositif de transport est configuré pour transporter le plateau porte-échantillons (120) entre la première unité de mesure (10) et la seconde unité de mesure (20).

4. Système d'analyse d'échantillon (100) selon la revendication 3, dans lequel
l'unité de transport (30) est configurée pour mettre le plateau porte-échantillons (120) en attente à une position d'attente sur la seconde voie de transport (32) jusqu'à ce que des résultats de mesure sur tous les échantillons contenus dans les récipients d'échantillons (110) portés sur le plateau porte-échantillons (120) soient déterminés pour savoir s'il faut ou non effectuer un nouvel essai.

5. Système d'analyse d'échantillon (100) selon la revendication 4, dans lequel
s'il est déterminé qu'il faut effectuer un nouvel essai, l'unité de transport (30) est configurée pour transporter le plateau porte-échantillons (120) jusqu'à la seconde unité de mesure (20) en transportant le plateau porte-échantillons (120) dans la seconde direction depuis la position d'attente.

6. Système d'analyse d'échantillon (100) selon l'une quelconque des revendications 1 à 5, dans lequel
l'unité de transport (30) inclut
une première partie de stockage (321) qui est disposée entre la première voie de transport (31) et la seconde voie de transport (32), et au niveau de laquelle le plateau porte-échantillons (120) reçu depuis la première voie de transport (31) peut être provisoirement stocké avant d'être fourni à la seconde voie de transport (32) et
une seconde partie de stockage (341) qui est disposée entre la première voie de transport (31) et la seconde voie de transport (32), et au niveau de laquelle le plateau porte-échantillons (120) reçu depuis la seconde voie de transport (32) peut être provisoirement stocké avant d'être fourni à la première voie de transport (31).

7. Système d'analyse d'échantillon (100) selon la revendication 6, dans lequel
l'unité de transport (30) inclut un dispositif d'alimentation de plateau porte-échantillons (337) configuré pour acheminer le plateau porte-échantillons (120) transporté le long de la première voie de transport (31) jusqu'à la première partie de stockage (321), et
le dispositif d'alimentation de plateau porte-échantillons (337) est mobile entre une position de retrait à laquelle le dispositif d'alimentation de plateau porte-échantillons (337) ne gêne pas le transport du plateau porte-échantillons (120) le long de la première voie de transport (31) et une position d'arrêt à laquelle le dispositif d'alimentation de plateau porte-échantillons (337) arrête le transport du plateau porte-échantillons (120) le long de la première voie de transport (31), et configuré pour acheminer le plateau porte-échantillons (120) arrêté à la position d'arrêt jusqu'à la première partie de stockage (321).

8. Système d'analyse d'échantillon (100) selon la revendication 6 ou 7, dans lequel
l'unité de transport (30) est configurée pour mettre le plateau porte-échantillons (120) en attente dans la seconde partie de stockage (341) jusqu'à ce que des résultats de mesure sur tous les échantillons portés sur le plateau porte-échantillons (120) soient déterminés pour savoir s'il faut ou non effectuer un nouvel essai.

9. Système d'analyse d'échantillon (100) selon la revendication 8, dans lequel
s'il est déterminé qu'il faut effectuer un nouvel essai dans le second ensemble, l'unité de transport (30) est configurée pour transporter le plateau porte-échantillons (120) depuis la seconde partie de stockage (341) dans le premier ensemble à travers la première voie de transport (31) du premier ensemble, la première voie de transport (31) dans le second ensemble adjacente à la première voie de transport (31) dans le premier ensemble, et la seconde voie de transport (32) dans le second ensemble, jusqu'à la seconde unité de mesure (20) dans le second ensemble.

10. Système d'analyse d'échantillon (100) selon l'une quelconque des revendications 6 à 9, dans lequel
l'unité de transport (30) inclut des premier et second transporteurs qui sont configurés pour transporter indépendamment le plateau porte-échantillons (120) dans les première et seconde directions dans la seconde voie de transport (32), et
avant l'envoi, à la seconde partie de stockage (341), d'un plateau porte-échantillons (120) qui est transporté par le premier dispositif de transport dans la seconde voie de transport (32) et dont tous les porte-échantillons (110) ont fini d'être fournis au bloc de mesure, l'unité de transport (30) fournit un autre plateau porte-échantillons (120) suivant de la première partie de stockage (321) à la seconde voie de transport (32) et transporte le plateau porte-échantillons (120) suivant dans la première direction au moyen du second dispositif de transport.

11. Système d'analyse d'échantillon (100) selon l'une quelconque des revendications 1 à 10, comprenant en outre :
un dispositif de commande de transport (80) programmé pour déterminer une destination du plateau porte-échantillons (120) chargé sur l'unité chargeuse (71) ; et
une unité de commande (40) qui est incluse dans chacun des ensembles (101) est reliée, de manière à pouvoir communiquer, au bloc de mesure dans l'ensemble correspondant et programmée pour commander une opération de mesure du bloc de mesure.

12. Système d'analyse d'échantillon (100) selon la revendication 11, dans lequel
l'unité de commande (40) est programmée pour recevoir des données de mesure sur un échantillon depuis le bloc de mesure et générer un résultat de mesure sur l'échantillon.

13. Système d'analyse d'échantillon (100) selon la revendication 11 ou 12, dans lequel
le dispositif de commande de transport (80) est programmé pour commander les unités de transport de sorte que les unités de transport transportent l'un des plateaux porte-échantillons (120) chargés sur l'unité chargeuse (71) jusqu'au bloc de mesure dans un premier ensemble parmi les ensembles (101) et transportent un autre des plateaux porte-échantillons (120) jusqu'au bloc de mesure dans un second ensemble parmi les ensembles (101).

14. Procédé d'analyse d'échantillon pour le fonctionnement du système d'analyse d'échantillon (100) selon l'une quelconque des revendications 1 à 13,
dans lequel le procédé d'analyse d'échantillon comprend :
le transport d'un plateau porte-échantillons (120) le long de la première voie de transport (31) ;
le placement du plateau porte-échantillons (120) depuis la première voie de transport (31) sur la seconde voie de transport (32) ; et
le transport, le long de la seconde voie de transport (32), du plateau porte-échantillons (120) en va-et-vient entre les première et seconde unités de mesure (10, 20) pour distribuer des récipients d'échantillons (110) portés sur le plateau porte-échantillons (120) aux première et seconde unités de mesure (10, 20).
